# EUROPEAN PATENT SPECIFICATION

(11) **EP 3 756 987 B1**
(45) Date of publication and mention of the grant of the patent: **30.03.2022**
(21) Application number: 19858256.1
(22) Date of filing: 30.08.2019
(51) Int. Cl.: B62K 19/24, B62K 5/027, B62K 5/05, B62K 5/06, B62K 5/10, B62K 5/08, B62K 11/04, B62K 19/32, B62K 25/08, B62K 5/00

(54) **LEANING VEHICLE**
NEIGEFAHRZEUG
VÉHICULE INCLINABLE

(30) Priority: 07.09.2018 JP 2018167913
(43) Date of publication of application: 30.12.2020
(73) Proprietor: YAMAHA HATSUDOKI KABUSHIKI KAISHA, Iwata-shi Shizuoka 438-8501 (JP)
(72) Inventor: IIZUKA Toshio, Iwata-shi, Shizuoka 438-8501 (JP)
(74) Representative: Grünecker Patent- und Rechtsanwälte PartG mbB
(86) International application number: PCT/JP2019/034057
(87) International publication number: WO 2020/050157

(56) References cited:
- EP-A1- 3 144 165
- EP-A2- 1 803 636
- EP-A2- 3 162 680
- WO-A1-2014/098198
- WO-A1-2017/017636
- WO-A1-2017/208992
- JP-A- 2018 095 147
- JP-U- S5 954 385
- US-B2- 9 440 504

## Description

The present invention relates to a leaning vehicle according to the preamble of independent claim 1. Such a leaning vehicle can be taken from the prior art document WO 2017/208992 A1.

Patent Literature 1 and Patent Literature 2 disclose a leaning vehicle which has a right front wheel, a left front wheel and a rear wheel and is configured to lean to the right to turn to the right and to lean to the left to turn to the left. This leaning vehicle has a parallelogram link mechanism configured to change a relative position between the right front wheel and the left front wheel in an up-and-down direction of a vehicle body frame accordingly as the vehicle body frame leans. This parallelogram link mechanism is supported at a link support portion in such a manner as to turn around a link axis extending substantially in a front-and-rear direction.

The parallelogram link mechanism includes an upper cross member that is supported by a link support portion in such a manner as to turn around a link axis at an intermediate portion thereof, a lower cross member that is supported by the link support portion in such a manner as to turn around a link axis at an intermediate portion thereof, a right side member that is coupled to a right portion of the upper cross member and a right portion of the lower cross member in such a manner as to turn so as to support an upper portion of a right shock absorbing device, and a left side member that is coupled to a left portion of the upper cross member and a left portion of the lower cross member in such a manner as to turn so as to support an upper portion of a left shock absorbing device. The link support portions are supported on the vehicle body frame.

### [Related Art Literatures]

### [Patent Literatures]

[Patent Literature 1]International Patent Publication WO2014/007819
[Patent Literature 2]International Patent Publication WO2014/098198

### [Summary of the Invention]

### [Problem that the Invention is to Solve]

Incidentally, in the leaning vehicle described in Patent Literature 1, since the right front wheel and the left front wheel roll on different road surfaces, force of different magnitudes is applied to the right front wheel and the left front wheel in the front-and-rear direction. As a result, force attempting to twist the link support portion that supports the parallelogram link mechanism around an axis extending in the up-and-down direction is applied to the link support portions.

For example, when the right front wheel rides on a step , while the left front wheel rolls on a flat road surface, force of a great magnitude attempting to push back the right front wheel in the front-and-rear direction, while no force is applied to the left front wheel in the front-and-rear direction. As a result, when seen from above the leaning vehicle, force attempting to twist the link support portion clockwise is applied to the link support portion.

In order to bear the force that attempts to twist the link support portion in the way described above, in the leaning vehicle described in Patent Literature 1, the link support portion is welded to a right frame and a left frame that are so highly rigid as to support a power unit. The right frame is welded to a right portion of the link support portion, and the left frame is welded to a left portion of the link support portion. In the leaning vehicle described in Patent Literature 2, a right frame and a left frame are welded to a single thick frame, and the link support portion is welded to the thick frame. By adopting these structures, the connecting strength that can bear the great twisting force applied to the link support portion is ensured.

In the leaning vehicle described in Patent Literature 1, however, the right frame and the left frame are shaped in such a way as to extend the link support portion, and further, a front end of the right frame is bent in the left direction so as to arrive at the right portion of the link support portion, while a front end of the left frame is bent in the right direction so as to arrive at the left end portion of the link support portion. In this way, in the structure of Patent Literature 1, a great limitation is imposed on the shape of the right frame and the shape of the left frame. In addition, in the leaning vehicle described in Patent Literature 2, the leaning vehicle tends to be enlarged in size in order to ensure the space where to provide the single thick frame.

Incidentally, the link support portion has an upper boss portion and a lower boss portion. An upper shaft member for supporting the upper cross member is provided at a distal end of the upper boss portion. The upper shaft member supports the upper cross member in such a manner as to turn around an upper intermediate axis. A lower shaft member for supporting the lower cross member is provided on a distal end face of the lower boss portion. The lower shaft member supports the lower cross member in such a manner as to turn around a lower intermediate axis. Since a center axis of the upper shaft member constitutes an upper intermediate leaning axis of the upper cross member, a sever shape accuracy is required on the upper boss portion. Since a center axis of the lower shaft member constitutes a lower intermediate leaning axis of the lower cross member, a sever shape accuracy is required on the lower boss portion.

For example, in the leaning vehicle described in Patent Literature 1, it is considered that a hole for supporting the upper shaft member is formed in the upper boss portion after the upper boss portion is welded to the link support portion, and then, the link support portion near the upper boss portion and the vehicle body frame are welded together. However, even though the hole can be formed in the upper boss portion with good accuracy, the upper boss portion is extended to be deformed by heat generated during welding work of welding the boss portion to the vehicle body frame, which is carried out after the hole is formed. As a result, the accuracy of the hole provided in the upper boss portion is deteriorated from the accuracy with which the hold is formed.

As a result, if a welded portion is provided near the upper boss portion and the lower boss portion, there is a possibility that the upper boss portion and the lower boss portion are deformed by the heat generated in the welding work, whereby the center axis of the upper shaft member and the center axis of the lower shaft member deviate from the predetermined directions. As a result, no welded portion is desired to be provided near the upper boss portion and the lower boss portion.

From this point of view, in the leaning vehicle described in Patent Literature 1, the upper boss portion and the lower boss portion are extended lengthwise in the front-and-rear direction so as to ensure a great heat capacity for the upper boss portion and the lower boss portion, so that the upper boss portion and the lower boss portion are hardly heated to a high temperature at the time of welding. In addition, in the leaning vehicle described in Patent Literature 2, the link support portion and the vehicle body frame are welded together at a portion lying far away from the upper boss portion and the lower boss portion.

In this way, in order to weld the link support portion to the vehicle body frame while ensuring the accuracy of the upper boss portion and the accuracy of the lower boss portion, the design of the vehicle body frame and the link support portion is greatly limited. Then, the inventor has expected to enhance the degree of freedom in design by attaching the link support portion to the vehicle body frame without involving welding.

Then, an object of the invention is to provide a leaning vehicle with two front wheels in which a link support portion can be assembled to a vehicle body frame without involving welding.

### [Means for Solving the Problem]

With a view to achieving the object, according to an aspect of the invention, there is provided a leaning vehicle including:
a vehicle body frame configured to lean to a right side of the leaning vehicle when the leaning vehicle takes a right turn and to lean to a left side of the leaning vehicle when the leaning vehicle takes a left turn;
a right front wheel configured to rotate around a right axle member that extends in a right axle axis direction;
a left front wheel provided directly on a left of the right front wheel with respect to the vehicle body frame and configured to rotate around a left axle member that extends in a left axle axis direction;
a link mechanism configured to change a relative position between the right front wheel and the left front wheel in an up-and-down direction of the vehicle body frame as the vehicle body frame leans;
a right shock absorbing device configured to support the right front wheel at a lower portion thereof and attenuate a relative displacement of the right front wheel to the link mechanism;
a left shock absorbing device configured to support the left front wheel at a lower portion thereof and attenuate a relative displacement of the left front wheel to the link mechanism;
a power unit support portion configured to support a power unit on the vehicle body frame; and
a steering mechanism
wherein the vehicle body frame includes:
   a vehicle body frame side monolithic body of an integral object into which a right frame extending in a front-and-rear direction and a left frame provided on the left of the right frame and extending in the front-and-rear direction are monolithically joined and on which the power unit support portion is provided; and
   a link side monolithic body,
   wherein the link mechanism includes:
   a right side member configured to support an upper portion of the right shock absorbing device in such a manner as to turn around a right steering axis that extends in the up-and-down direction of the vehicle body frame;
   a left side member configured to support an upper portion of the left shock absorbing device in such a manner as to turn around a left steering axis that is parallel to the right steering axis;
   an upper cross member configured to support an upper portion of the right side member at a right end portion thereof in such a manner as to turn around an upper right leaning axis and support an upper portion of the left side member at a left end portion thereof in such a manner as to turn around an upper left leaning axis that is parallel to the upper right leaning axis and configured to be supported on the link side monolithic body at an intermediate portion thereof in such a manner as to turn around an upper intermediate leaning axis that is parallel to the upper right leaning axis; and
   a lower cross member configured to support a lower portion of the right side member at a right end portion thereof in such a manner as to turn around a lower right leaning axis that is parallel to the upper right leaning axis and support a lower portion of the left side member at a left end portion thereof in such a manner as to turn around a lower left leaning axis that is parallel to the upper left leaning axis and configured to be supported on the link side monolithic body at an intermediate portion thereof in such a manner as to turn around a lower intermediate leaning axis that is parallel to the upper intermediate leaning axis;
   wherein the steering mechanism includes:
      a steering force input portion into which steering force is inputted;
      a steering shaft coupled to the steering force input portion and configured to rotate around an intermediate steering axis that extends in the up-and-down direction of the vehicle body frame; and
      a steering force transmission mechanism coupled to the steering shaft and configured to transmit a rotation of the steering shaft to the right shock absorbing device and the left shock absorbing device,
      wherein a main pipe portion configured to support the steering shaft in such a manner as to turn around the intermediate steering axis, an upper boss portion configured to support the intermediate portion of the upper cross member in such a manner as to turn around the upper intermediate leaning axis, and a lower boss portion configured to support the intermediate portion of the lower cross member in such a manner as to turn around the lower intermediate leaning axis are monolithically joined together into an integral object at the link side monolithic body, and
      wherein the link side monolithic body is fastened to the vehicle body side monolithic body with a bolt.

In the leaning vehicle described above, the lower cross member may include a lower rear cross element that is positioned behind the link side monolithic body, the lower boss portion may include a lower rear hole portion where a lower rear shaft member configured to support the lower rear cross element in such a manner as to turn around the lower intermediate leaning axis is supported, and the bolt may be supported in the lower rear hole portion.

In the leaning vehicle described above, the bolt may extend from the lower rear hole portion, penetrate the lower rear cross element and be fastened to the vehicle body side monolithic body.

In the leaning vehicle described above, the bolt may extend along the lower intermediate leaning axis.

In the leaning vehicle described above, a first fastening portion into which the bolt is inserted may be joined monolithically to the vehicle body side monolithic body into an integral object, and the first fastening portion may be fixed to the vehicle body frame at a plurality of locations in an axial direction of the bolt.

In the leaning vehicle described above, a plate-like portion whose normal direction is parallel to the lower intermediate leaning axis may be joined monolithically to the vehicle body side monolithic body into an integral object.

In the leaning vehicle described above, the leaning vehicle may include at least either of upper bolts that are provided above the lower cross member and are provided on the right and left of the lower intermediate leaning axis and lower bolts that are provided below the lower cross member and are provided on the right and left of the lower intermediate leaning axis.

In the leaning vehicle described above, the upper cross member may be provided ahead of the link side monolithic body, and the upper bolt may be provided behind the link side monolithic body in a position where the upper bolt overlaps the upper cross member in a front view of the leaning vehicle.

In the leaning vehicle described above,
the right frame may include:
a right upper frame that extends in the front-and-rear direction; and
a right lower frame that extends in the front-and-rear direction and is positioned below the right upper frame,
a left frame may include:
   a left upper frame that extends in the front-and-rear direction; and
   a left lower frame that extends in the front-and-rear direction and is positioned below the left upper frame, and
   the right upper frame, the right lower frame, the left upper frame, and the left lower frame may be joined monolithically to the vehicle body side monolithic body into an integral object.

In the leaning vehicle described above,
the upper cross member may be positioned ahead of the main pipe portion,
the lower cross member may include a lower front cross element that is positioned ahead of the main pipe portion and a lower rear cross element that is positioned behind the main pipe portion, and
the upper boss portion configured to support an upper shaft member configured to support the upper cross member in such a manner as to turn around the upper intermediate leaning axis, a lower front boss portion configured to support a lower front shaft member configured to support the lower front cross element in such a manner as to turn around the lower intermediate leaning axis, and a lower rear boss portion configured to support a lower rear shaft member configured to support the lower rear cross element in such a manner as to turn around the lower intermediate leaning axis may be joined monolithically to the link side monolithic body.

### [Advantageous Effect of the Invention]

According to the invention, the leaning vehicle with two front wheels is provided in which the link support portion can be assembled to the vehicle body frame without involving welding.

### [Brief Description of Drawings]

Fig. 1 is a left side view of the whole of a leaning vehicle according to an embodiment resulting when the leaning vehicle is seen from a left thereof.
Fig. 2 is a front view showing a front portion of the leaning vehicle described above.
Fig. 3 is a plan view showing the front portion of the leaning vehicle described above.
Fig. 4 is a plan view showing the front portion of the leaning vehicle described above when the leaning vehicle is steered to turn to the left.
Fig. 5 is a front view showing the front portion of the leaning vehicle described above when the leaning vehicle is caused to lean to the left.
Fig. 6 is a front view showing the front portion of the leaning vehicle described above when the leaning vehicle is caused to lean to the left and is steered to turn to the left.
Fig. 7 shows a vehicle body frame of the leaning vehicle according to the embodiment.
Fig. 8 is a perspective view showing a vehicle body side monolithic body.
Fig. 9 is a cross-sectional view showing the vehicle body side monolithic body.
Fig. 10 is a perspective view showing a link side monolithic body.
Fig. 11 is a cross-sectional view showing the link side monolithic body.
Fig. 12 is a cross-sectional view showing a joining portion where the vehicle body side monolithic body and the link side monolithic body are joined together.

### [EMBODIMENTS]

Referring to the accompanying drawings, a preferred embodiment will be described in detail below.

In the accompanying drawings, an arrow F denotes ahead of a leaning vehicle. An arrow B denotes behind of the leaning vehicle. An arrow U denotes above the leaning vehicle. An arrow D denotes below the leaning vehicle. An arrow R denotes on the right of the leaning vehicle. An Arrow L denotes on the left of the leaning vehicle.

A vehicle turns with a body frame leaning in a left-and-right direction of the leaning vehicle relative to a vertical direction. Then, in addition to the directions based on the leaning vehicle, directions based on the vehicle body frame are defined. In the accompanying drawings, an arrow FF denotes ahead of the vehicle body frame. An arrow FB denotes behind of the vehicle body frame. An arrow FU denotes above the vehicle body frame. An arrow FD denotes below the vehicle body frame. An arrow FR denotes on the right of the vehicle body frame. An Arrow FL denotes on the left of the vehicle body frame.

In this description, a "front-and-rear direction of the body frame," a "left-and-right direction of the body frame" and an "up-and-down direction of the body frame" means a front-and-rear direction, a left-and-right direction and an up-and-down direction based on the body frame as viewed from a driver who rides the vehicle. "The side of the body frame" denotes on the right or the on the left of the body frame.

In this description, an expression reading "something extends in the front-and-rear direction of the vehicle body frame" includes a situation in which something extends in the front-and-rear direction of the vehicle body frame while being inclined in relation to the front-and-rear direction of the vehicle body frame and means that something extends with a gradient which is closer to the front-and-rear direction of the vehicle body frame rather than the left-and-right direction and the up-and-down direction of the vehicle body frame.

In this description, an expression reading "something extends in the left-and-right direction of the vehicle body frame" includes a situation in which something extends in the left-and-right direction of the vehicle body frame while being inclined in relation to the left-and-right direction of the vehicle body frame and means that something extends with a gradient which is closer to the left-and-right direction of the vehicle body frame rather than the front-and-rear direction and the up-and-down direction of the vehicle body frame.

In this description, an expression reading "something extends in the up-and-down direction of the vehicle body frame" includes a situation in which something extends in the up-and-down direction of the vehicle body frame while being inclined in relation to the up-and-down direction of the vehicle body frame and means that something extends with a gradient which is closer to the up-and-down direction of the vehicle body frame rather than the front-and-rear direction and the left-and-right direction of the vehicle body frame.

In this description, an expression reading the "leaning vehicle is standing upright or in an upright state" or the "body frame is standing upright or in the upright state" means a state in which the leaning vehicle is not steered at all and the up-down direction of the body frame coincides with the vertical direction. In this state, the direction based on the leaning vehicle coincides with the direction based on the body frame. When the leaning vehicle is turning with the body frame caused to lean to the left or right from the vertical direction, the left-and-right direction of the leaning vehicle does not coincide with the left-and-right direction of the body frame. The up-and-down direction of the leaning vehicle does not coincide with the up-and-down direction of the body frame, too. However, the front-and-rear direction of the vehicle coincides with the front-and-rear direction of the body frame.

In this description, an expression reading "directly on the left of a member A in the left-right direction of the body frame" denotes a space through which the member A passes when the member A is translated to the left in the left-right direction of the body frame. An expression reading "directly on the right of the member A in the left-and-right direction" is also defined in the same way.

In this description, an expression reading "on the left of the member A in the left-right direction of the body frame" includes not only the space through which the member A passes when the member A is translated to the left in the left-right direction of the body frame but also a space which expands from the space in directions which are at right angles to the left-right direction of the body frame. An expression reading "on the right of the member A" is also defined in the same way.

In this description, an expression reading "directly above the member A in the up-down direction of the body frame" denotes a space through which the member A passes when the member A is translated upwards in the up-down direction of the body frame. An expression reading "directly below the member A in the up-and-down direction" is defined in the same way.

In this description, an expression reading "above the member A in the up-down direction of the body frame" includes not only the space through which the member A passes when the member A is translated upwards in the up-down direction of the body frame but also a space which expands from the space in directions which are at right angles to the up-down direction of the body frame. An expression reading "below the member A" is also defined in the same way.

In this description, an expression reading "directly ahead of the member A in the front-rear direction of the body frame" denotes a space through which the member A passes when the member A is translated to the front in the front-rear direction of the body frame. An expression reading "directly behind the member A in the front-and-rear direction" is defined in the same way.

In this description, an expression reading "ahead of the member A in the front-rear direction of the body frame" includes not only the space through which the member A passes when the member A is translated to the front in the front-rear direction of the body frame but also a space which expands from the space in directions which are at right angles to the front-rear direction of the body frame. An expression reading "behind the member A" is also defined in the same way.

In this description, "rotation or rotating" means that a member is displaced at an angle of 360 degrees or more about an axis thereof. In this description, "turn or turning" means that a member is displaced at an angle of less than 360 degrees about an axis thereof.

In this description, "coupled to" means that a first member and a second member are directly coupled together and also means that the first member and the second member are indirectly coupled together via a third member.

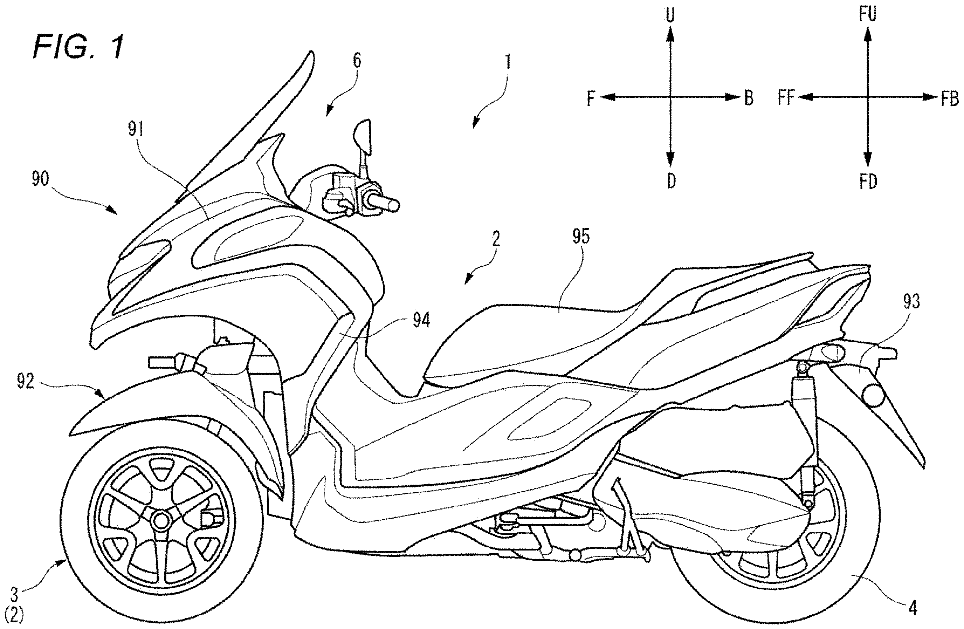

Referring to Figs. 1 to 12, a leaning vehicle 1 according to an embodiment will be described. As shown in Fig. 1, the leaning vehicle 1 includes a right front wheel 2, a left front wheel 3, a rear wheel 4, a link mechanism 5, and a steering mechanism 6.

The leaning vehicle 1 includes a vehicle body cover 90, a seat 95, and a power unit 96.

In Fig. 1, a vehicle body frame 10 is staying in an upright state. The following description, which will be made while referring to Fig. 1, is based on the premise that the vehicle body frame 10 stands upright. Fig. 1 is a left side view of the whole of the leaning vehicle 1 as seen from a left side thereof in a left-and-right direction of the vehicle body frame 10.

The vehicle body frame 10 includes a main pipe portion 21 configured to support a steering shaft 62 in such a manner as to turn.

The main pipe portion 21 is disposed at a front portion of the leaning vehicle 1. When the leaning vehicle 1 is seen from the left-and-right direction of the vehicle body frame 10, an upper portion of the main pipe portion 21 is disposed behind a lower portion of the main pipe portion 21 in a front-and-rear direction of the vehicle body frame 10. The body frame 10 will be described in detail later.

The vehicle body cover 90 constitutes a vehicle body component for covering at least part of groups of components that make up the leaning vehicle 1. The vehicle body cover 90 includes a front cover 91, two front fenders 92, a rear fender 93, and a leg shield 94.

The front cover 91 is disposed ahead of the seat 95 in the front-and-rear direction of the vehicle body frame 10. The front cover 91 covers the link mechanism 5 and at least part of the steering mechanism 6. The front cover 91 is disposed so as not to be displaced relative to the vehicle body frame 10.

At least portions of the two front fenders 92 are disposed directly below the front cover 91. At least portions of the two front fenders 92 are disposed above the right front wheel 2 and the left front wheel 3.

The right front wheel 2 and the left front wheel 3 are disposed below the main pipe portion 21 in the up-and-down direction of the vehicle body frame 10. At least portions of the right front wheel 2 and the left front wheel 3 are disposed directly below the front cover 91 in the up-and-down direction of the vehicle body frame 10.

At least part of the rear wheel 4 is disposed below the seat 95 in the up-and-down direction of the vehicle body frame 10. At least part of the rear wheel 4 is disposed directly below the rear fender 93 in the up-and-down direction of the vehicle body frame 10.

The leg shield 94 is disposed behind the right front wheel 2 and the left front wheel 3 and ahead of the seat 95 in the front-and-rear direction of the vehicle body frame 10. When seen from the front of the leaning vehicle 1, the leg shield 94 is disposed in a position where to cover at least partially leg portions of a driver who sits on the seat 95.

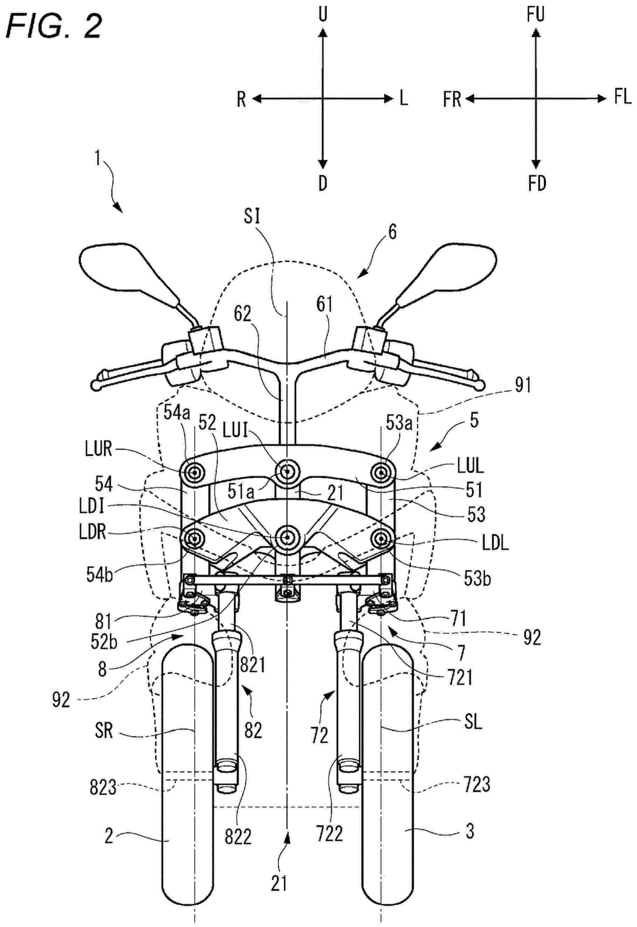

Fig. 2 is a front view of a front portion of the leaning vehicle 1 as seen from the front in the front-and-rear direction of the vehicle body frame 10. In Fig. 2, the vehicle body frame 10 is staying in an upright state. The following description, which will be made while referring to Fig. 2, is based on the premise that the vehicle body frame 10 stands upright. Fig. 2 shows the front portion of the leaning vehicle 1 as seen through the front cover 91 and the two front fenders 92 which are shown by broken lines.

The left front wheel 3 is disposed on the left of the main pipe portion 21 which constitutes a part of the vehicle body frame 10 in the left-and-right direction of the vehicle body frame 10. The right front wheel 2 is disposed on the right of the main pipe portion 21 in the left-and-right direction of the vehicle body frame 10. The left front wheel 3 and the right front wheel 2 are arranged to be aligned side by side in the left-and-right direction of the vehicle body frame 10.

The two front fenders 92 include a left fender and a right fender. The left fender covers at least part of an upper surface of the left front wheel 3. The right fender covers at least part of an upper surface of the right front wheel 2.

The steering mechanism 6 includes a handlebar 61 and the steering shaft 62. The steering shaft 62 extends downwards from a laterally central portion of the handlebar 61. The steering shaft 62 is supported on the main pipe portion 21 via an intermediate steering bearing portion, not shown. As a result, the steering shaft 62 can turn around an intermediate steering axis SI relative to the main pipe portion 21.

In the leaning vehicle 1 according to this embodiment, the link mechanism 5 adopts a parallel four-joint link (also referred to as a "parallelogram link" from time to time).

The link mechanism 5 is disposed above the left front wheel 3 and the right front wheel 2 in the up--and-down direction of the vehicle body frame 10. The link mechanism 5 includes an upper cross member 51, a lower cross member 52, a left side member 53, and a right side member 54. The link mechanism 5 is not interlocked with the turning of the steering shaft 62 around the intermediate steering axis SI which is triggered in association with the operation of the handlebar 61. That is, the link mechanism 5 does not turn around the intermediate steering axis SI relative to the body frame 10.

The main pipe portion 21 includes an upper intermediate leaning bearing portion 51a. An intermediate portion of the upper cross member 51 is supported on the main pipe portion 21 via the upper intermediate leaning bearing portion 51a. The upper cross member 51 can turn relative to the main pipe portion 21 around an upper intermediate leaning axis LUI that extends through the upper intermediate leaning bearing portion 51a in the front-and-rear direction of the vehicle body frame 10.

The main pipe portion 21 includes a lower intermediate bearing portion 51b. An intermediate portion of the lower cross member 52 is supported on the main pipe portion 21 via the lower intermediate leaning bearing portion 51b. The lower cross member 52 can turn relative to the main pipe portion 21 around a lower intermediate leaning axis LDI that extends through the lower intermediate leaning bearing portion 51b in the front-and-rear direction of the vehicle body frame 10.

The left side member 53 includes an upper left leaning bearing portion 53a. A left end portion of the upper cross member 51 is coupled to the left side member 53 via the upper left leaning bearing portion 53a. The upper cross member 51 can turn relative to the left side member 53 around an upper left leaning axis LUL that passes through the upper left leaning bearing portion 53a to extend in the front-and-rear direction of the vehicle body frame 10.

The right side member 54 includes an upper right leaning bearing portion 54a. A right end portion of the upper cross member 51 is coupled to the right side member 54 via the upper right leaning bearing portion 54a. The upper cross member 51 can turn relative to the right side member 54 around an upper right leaning axis LUR that passes through the upper right leaning bearing portion 54a to extend in the front-and-rear direction of the vehicle body frame 10.

The left side member 53 includes a lower left leaning bearing portion 53b. A left end portion of the lower cross member 52 is coupled to the left side member 53 via the lower left leaning bearing portion 53b. The lower cross member 52 can turn relative to the left side member 53 around a lower left leaning axis LDL that passes through the lower left leaning bearing portion 53b to extend in the front-and-rear direction of the vehicle body frame 10.

The right side member 54 includes a lower right leaning bearing portion 54b. A right end portion of the lower cross member 52 is coupled to the right side member 54 via the lower right leaning bearing portion 54b. The lower cross member 52 can turn relative to the right side member 54 around a lower right leaning axis LDR that passes through the lower right leaning bearing portion 54b to extend in the front-and-rear direction of the vehicle body frame 10.

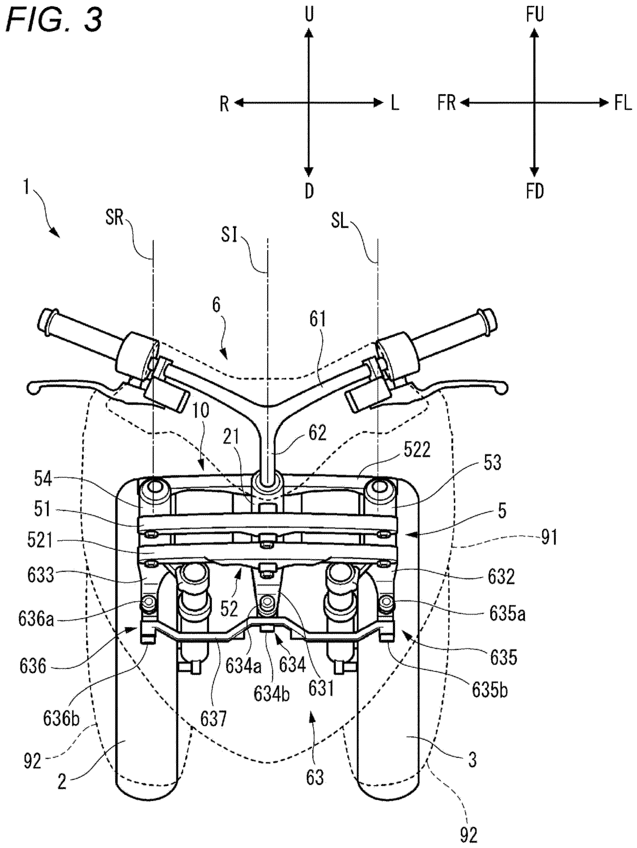

Fig. 3 is a plan view of the front portion of the leaning vehicle 1 as seen from above in the up-and-down direction of the vehicle body frame 10. In Fig. 3, the vehicle body frame 10 is staying in the upright state. The following description, which will be made while referring to Fig. 3, is based on the premise that the vehicle body frame 10 stands upright. Fig. 3 shows the front portion of the leaning vehicle 1 as seen through the front cover 91 and the two front fenders 92 which are shown by broken lines.

The upper cross member 51 is disposed ahead of the main pipe portion 21 in the front-and-rear direction of the vehicle body frame 10. The upper cross member 51 is a plate-like member that extends in the left-and-right direction of the vehicle body frame 10 without being curved in the front-and-rear direction of the vehicle body frame 10.

As shown in Figs. 2 and 3, the lower cross member 52 is disposed below the upper cross member 51 in the up-and-down direction of the vehicle body frame 10. The lower cross member 52 includes a lower front cross element 521 and a lower rear cross element 522. The lower front cross element 521 is disposed ahead of the main pipe portion 21, the left side member 53, and the right side member 54 in the front-and-rear direction of the vehicle body frame 10. The lower rear cross element 522 is disposed behind the main pipe portion 21, the left side member 53, and the right side member 54 in the front-and-rear direction of the vehicle body frame 10. The lower front cross element 521 and the lower rear cross element 522 extend in the left-and-right direction of the vehicle body frame 10.

As shown in Figs. 2 and 3, the left side member 53 is disposed directly on the left of the main pipe portion 21 in the left-and-right direction of the vehicle body frame 10. The left side member 53 is disposed above the left front wheel 3 in the up-and-down direction of the vehicle body frame 10. The left side member 53 extends in a direction in which the main pipe portion 21 extends. An upper portion of the left side member 53 is disposed behind a lower portion thereof in the front-and-rear direction of the vehicle body frame 10.

As shown in Figs. 2 and 3, the right side member 54 is disposed directly on the right of the main pipe portion 21 in the left-and-right direction of the vehicle body frame 10. The right side member 54 is disposed above the right front wheel 2 in the up-and-down of the vehicle body frame 10. The right side member 54 extends in a direction in which the main pipe portion 21 extends. An upper portion of the right side member 54 is disposed behind a lower portion thereof in the front-and-rear direction of the vehicle body frame 10.

The upper cross member 51, the lower cross member 52, the left side member 53 and the right side member 54 are supported on the main pipe portion 21 in such a manner that the upper cross member 51 and the lower cross member 52 are kept parallel to each other in posture and that the left side member 53 and the right side member 54 are kept parallel to each other in posture.

As shown in Fig. 2, the leaning vehicle 1 includes a left suspension unit 7. The left suspension unit 7 includes a left bracket 71 and a left shock absorbing device 72.

The left bracket 71 includes a left turnable member (not shown) at an upper portion thereof. The left turnable member is disposed in an interior of the left side member 53 and extends in the same direction as a direction in which the left side member 53 extends. The left side member 53 includes a left steering bearing portion (not shown). The left turnable member is supported on the left side member 53 via the left steering bearing portion. As a result, the left turnable member can turn around a left steering axis SL relative to the left side member 53. That is, the left bracket 71 is coupled with the left side member 53 so that they can turn around the left steering axis SL relative to each other.

The left steering axis SL extends in the direction in which the left side member 53 extends. As shown in Fig. 2, the left steering axis SL extends parallel to the intermediate steering axis SI of the steering shaft 62 in the up-and-down direction of the vehicle body frame 10. As shown in Fig. 3, the left steering axis SL extends parallel to the intermediate steering axis SI of the steering shaft 62 in the up-and-down direction of the vehicle body frame 10.

The left shock absorbing device 72 is a so-called telescopic shock absorbing mechanism. As shown in Fig. 2, the left shock absorbing device 72 includes a left upper telescopic element 721, a left lower telescopic element 722, and a left axle member 723.

The left upper telescopic element 721 is supported on the left bracket 71. The left lower telescopic element 722 is coupled to the left upper telescopic element 721 in such a manner as to slide relative to the left upper telescopic element 721. A displacement of the left front wheel 3 relative to the link mechanism 5 in the up-and-down direction of the vehicle body frame 10 is attenuated by the left lower telescopic element 722 sliding relative to the left upper telescopic element 721.

The left axle member 723 is supported on the left lower telescopic element 722. The left axle member 723 supports the left front wheel 3. The left front wheel 3 can rotate around the left axle member 723.

As shown in Fig. 2, the leaning vehicle 1 includes a right suspension unit 8. The right suspension unit 8 includes a right bracket 81 and a right shock absorbing device 82.

The right bracket 81 includes a right turnable member (not shown) at an upper portion thereof. The right turnable member is disposed in an interior of the right side member 54 and extends in the same direction as a direction in which the right side member 54 extends. The right side member 54 includes a right steering bearing portion (not shown). The right turnable member is supported on the right side member 54 via the right steering bearing portion. As a result, the right turnable member can turn around a right steering axis SR relative to the right side member 54. That is, the right bracket 81 is coupled with the right side member 54 so that they can turn around the right steering axis SR relative to each other.

The right steering axis SR extends in the direction in which the right side member 54 extends. As shown in Fig. 2, the right steering axis SR extends parallel to the intermediate steering axis SI of the steering shaft 62 in the up-and-down direction of the vehicle body frame 10. As shown in Fig. 3, the right steering axis SR extends parallel to the intermediate steering axis SI of the steering shaft 62 in the up-and-down direction of the vehicle body frame 10.

The right shock absorbing device 82 is a so-called telescopic shock absorbing mechanism. As shown in Fig. 2, the right shock absorbing device 82 includes a right upper telescopic element 821, a right lower telescopic element 822, and a right axle member 823.

The right upper telescopic element 821 is supported on the right bracket 81. The right lower telescopic element 822 is coupled to the right upper telescopic element 821 in such a manner as to slide relative to the right upper telescopic element 821. A displacement of the right front wheel 2 relative to the link mechanism 5 in the up-and-down direction of the vehicle body frame 10 is attenuated by the right lower telescopic element 822 sliding relative to the right upper telescopic element 821.

The right axle member 823 is supported on the right lower telescopic element 822. The right axle member 823 supports the right front wheel 2. The right front wheel 2 can rotate around the right axle member 823.

As shown in Fig. 3, the steering mechanism 6 includes a steering force transmission mechanism 63. The steering force transmission mechanism 63 includes an intermediate transmission plate 631, a left transmission plate 632, a right transmission plate 633, an intermediate joint 634, a left joint 635, a right joint 636 and a tie rod 637.

The intermediate transmission plate 631 is provided at a lower portion of the steering shaft 62. The intermediate transmission plate 631 can turn relative to the main pipe portion 21 around an axis that extends parallel to the intermediate steering axis SI of the steering shaft 62.

The left transmission plate 632 is disposed directly on the left of the intermediate transmission plate 631. The left transmission plate 632 is connected to a lower portion of the left bracket 71. The left transmission plate 632 cannot turn relative to the left bracket 71. The left transmission plate 632 can turn around the left steering axis SL relative to the left side member 53.

The right transmission plate 633 is disposed directly on the right of the intermediate transmission plate 631 in the left-and-right direction of the vehicle body frame 10. The right transmission plate 633 is connected to a lower portion of the right bracket 81. The right transmission plate 633 cannot turn relative to the right bracket 81. The right transmission plate 633 can turn around the right steering axis SR relative to the right side member 54.

The intermediate joint 634 includes an intermediate joint steering bearing portion 634a. The intermediate joint steering bearing portion 634a defines an intermediate joint steering axis that extends in the up-and-down direction of the vehicle body frame 10. The intermediate joint 634 is coupled to a front portion of the intermediate transmission plate 631 via the intermediate joint steering bearing portion 634a. This enables the intermediate joint 634 to turn relative to the intermediate transmission plate 631 around the intermediate joint steering axis.

The left joint 635 is disposed on the left of the intermediate joint 634 in the left-and-right direction of the vehicle body frame 10. The left joint 635 includes a left joint steering bearing portion 635a. The left joint steering bearing portion 635a defines a left joint steering axis that extends in the up-and-down direction of the vehicle body frame 10. The left joint 635 is coupled to a front portion of the left transmission plate 632 via the left joint steering bearing portion 635a. This enables the left joint 635 to turn relative to the left transmission plate 632 around the left joint steering axis.

The right joint 636 is disposed on the right of the intermediate joint 634 in the left-and-right direction of the vehicle body frame 10. The right joint 636 includes a right joint steering bearing portion 636a. The right joint steering bearing portion 636a defines a right joint steering axis that extends in the up-and-down direction of the vehicle body frame 10. The right joint 636 is coupled to a front portion of the right transmission plate 633 via the right joint steering bearing portion 636a. This enables the right joint 636 to turn relative to the right transmission plate 633 around the right joint steering axis.

The intermediate joint 634 includes an intermediate joint leaning bearing portion 634b. The intermediate joint leaning bearing portion 634b defines an intermediate joint leaning axis that extends in the front-and-rear direction of the vehicle body frame 10. An intermediate portion of the tie rod 637 is coupled to the intermediate joint leaning bearing portion 634b. The intermediate portion of the tie rod 637 can turn relative to the intermediate joint leaning bearing portion 634b around the intermediate joint leaning axis.

The left joint 635 includes a left joint leaning bearing portion 635b. The left joint leaning bearing portion 635b defines a left joint leaning axis that extends in the front-and-rear direction of the vehicle body frame 10. A left portion of the tie rod 637 is coupled to the left joint leaning bearing portion 635b. The left portion of the tie rod 637 can turn relative to the left joint leaning bearing portion 635b around the left joint leaning axis.

The right joint 636 includes a right joint leaning bearing portion 636b. The right joint leaning bearing portion 636b defines a right joint leaning axis that extends in the front-and-rear direction of the vehicle body frame 10. Aright portion of the tie rod 637 is coupled to the right joint leaning bearing portion 636b. The right portion of the tie rod 637 can turn relative to the right joint leaning bearing portion 636b about the right joint leaning axis.

The left transmission plate 632 is coupled to the intermediate transmission plate 631 via the left joint 635, the tie rod 637 and the intermediate joint 634. The right transmission plate 633 is coupled to the intermediate transmission plate 631 via the right joint 636, the tie rod 637 and the intermediate joint 634. The left transmission plate 632 and the right transmission plate 633 are coupled to each other via the left joint 635, the tie rod 637 and the right joint 636. In other words, the tie rod 637 couples the intermediate transmission plate 631 to the left transmission plate 632 and the right transmission plate 633.

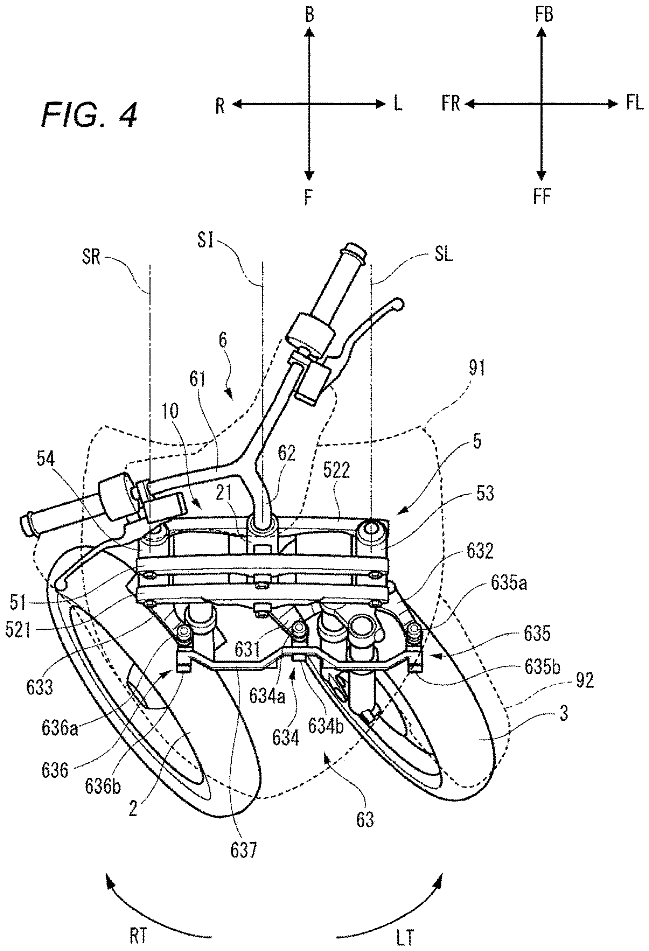

Next, referring to Fig. 4, a steering operation of the leaning vehicle 1 will be described. Fig. 4 is a plan view of the front portion of the leaning vehicle 1 as viewed from above in the up-and-down direction of the vehicle body frame 10 with the left front wheel 3 and the right front wheel 2 steered to turn to the left. In Fig. 4, the vehicle body frame 10 is staying in the upright state. The following description, which will be made while referring to Fig. 4, is based on the premise that the vehicle body frame 10 stands upright. Fig. 4 shows the front portion of the leaning vehicle 1 as seen through the front cover 91 and the two front fenders 92 which are shown by broken lines.

When the driver operates the handlebar 61, the steering shaft 62 turns about the intermediate steering axis SI relative to the main pipe portion 21. In the case where the front wheels are steered to turn to the left as shown in Fig. 4, the steering shaft 62 turns in a direction indicated by an arrow LT. The intermediate transmission plate 631 turns in the direction indicated by the arrow LT around the intermediate steering axis SI relative to the main pipe portion 21.

The intermediate joint 634 of the tie rod 637 turns in a direction indicated by an arrow RT relative to the intermediate transmission plate 631 in association with the turning of the intermediate transmission plate 631 in the direction indicated by the arrow LT. As a result, the tie rod 637 moves to the left in the left-and-right direction of the vehicle body frame 10 and to the rear in the front-and-rear direction of the vehicle body frame 10 while maintaining its posture.

As the tie rod 637 moves in the way described above, the left joint 635 and the right joint 636 of the tie rod 637 turn in the direction indicated by the arrow RT relative to the left transmission plate 632 and the right transmission plate 633, respectively. As a result, the left transmission plate 632 and the right transmission plate 633 turn in the direction indicated by the arrow LT with the tie rod 637 maintaining its posture.

When the left transmission plate 632 turns in the direction indicated by the arrow LT, the left bracket 71, which is not turnable relative to the left transmission plate 632, turns in the direction indicated by the arrow LT around the left steering axis SL relative to the left side member 53.

When the right transmission plate 633 turns in the direction indicated by the arrow LT, the right bracket 81, which is not turnable relative to the right transmission plate 633, turns in the direction indicated by the arrow LT around the right steering axis SR relative to the right side member 54.

When the left bracket 71 turns in the direction indicated by the arrow LT, the left shock absorbing device 72, which is supported on the left bracket 71, turns in the direction indicated by the arrow LT around the left steering axis SL relative to the left side member 53. When the left shock absorbing device 72 turns in the direction of the arrow LT, the left front wheel 3, which is supported on the left shock absorbing device 72 by way of the left axle member 723, turns in the direction of the arrow LT around the left steering axis SL relative to the left side member 53. At this time, the left front fender also turns in the direction indicated by the arrow LT together with the left front wheel 3.

When the right bracket 81 turns in the direction indicated by the arrow LT, the right shock absorbing device 82, which is supported on the right bracket 81, turns in the direction indicated by the arrow LT around the right steering axis SR relative to the right side member 54. When the right shock absorbing device 82 turns in the direction indicated by the arrow LT, the right front wheel 2, which is supported on the right shock absorbing device 82 by way of the right axle member 823, turns in the direction indicated by the arrow LT around the right steering axis SR relative to the right side member 54. At this time, the right front fender also turns in the direction indicated by the arrow LT together with the right front wheel 2.

When the driver operates the handlebar 61 so as to steer the left and right wheels to turn to the right, the elements described above turn in an opposite direction to the direction in which they turn when the left and right front wheels are steered to turn to the left. Since the elements move simply in the opposite directions in the left-and-right direction, a detailed description of the movements of the elements when the driver so operates the handlebar 61 will be omitted here.

The steering force transmission mechanism 63 couples the left suspension unit 7 and the right suspension unit 8 together and turns the left front wheel 3 and the right front wheel 2 in the direction in which the handlebar 61 is turned in response to the turning of the handlebar 61.

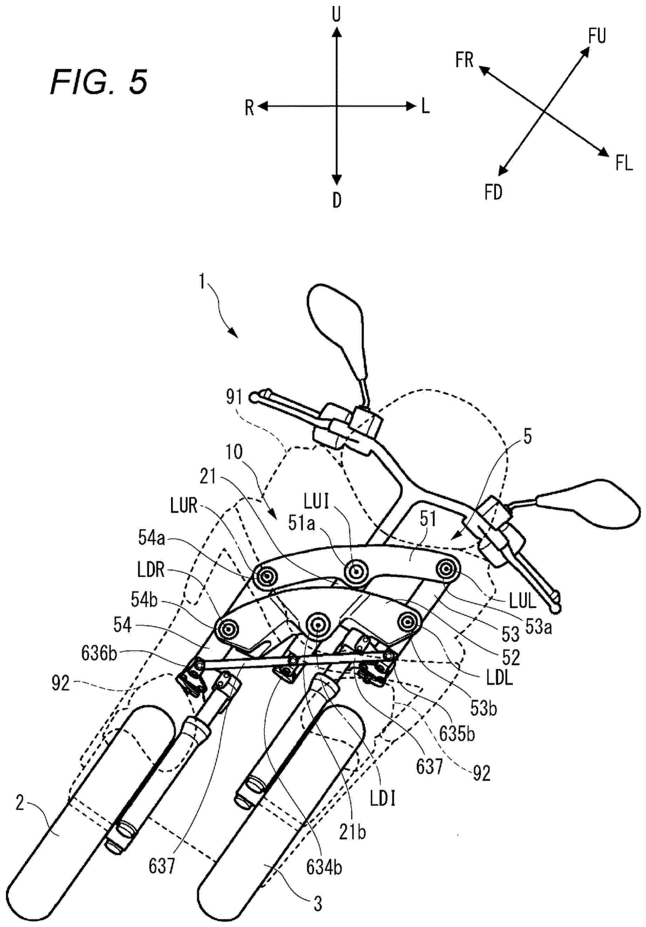

Next, referring to Figs. 2 and 5, a leaning operation of the leaning vehicle 1 will be described. Fig. 5 is a front view of the front portion of the leaning vehicle 1 as seen from the front in the front-and-rear direction of the vehicle body frame 10, with the vehicle body frame 10 being caused to lean to the left of the leaning vehicle 1. Fig. 5 shows the front portion of the leaning vehicle 1 as seen through the front cover 91 and the two front fenders 92 which are shown by broken lines.

As shown in Fig. 2 when the leaning vehicle 1 is seen from the front of the vehicle body frame 10 staying in the upright state, the link mechanism 5 is taking a rectangular shape. As shown in Fig. 5, when the leaning vehicle 1 is seen from the front of the vehicle body frame 10 staying in a leaning state, the link mechanism 5 is taking a parallelogram shape. The operation of the link mechanism 5 is interlocked with the leaning of the vehicle body frame 10 in the left-and-right direction thereof. The "operation of the link mechanism 5" means a change in the shape of the link mechanism 5 as a result of the upper cross member 51 and the lower cross member 52 turning relative to the main pipe portion 21 around the upper intermediate leaning axis LUI and the lower intermediate leaning axis LDI, respectively, and the upper cross member 51, the lower cross member 52, the left side member 53 and the right side member 54 turning relatively around the upper left leaning axis LUL, the upper right leaning axis LUR, the lower left leaning axis LDL and the lower right leaning axis LDR, respectively.

For example, as shown in Fig. 5, when the driver causes the leaning vehicle 1 to lean to the left, the main pipe portion 21 leans to the left from the vertical direction. When the main pipe portion 21 leans, the upper cross member 51 turns counterclockwise relative to the main pipe portion 21 around the upper intermediate leaning axis LUI that passes through the upper intermediate leaning bearing portion 51a when the leaning vehicle 1 is seen from the front thereof. Similarly, the lower cross member 52 turns counterclockwise relative to the main pipe portion 21 around the lower intermediate leaning axis LDI that passes through the lower intermediate leaning bearing portion 51b when the leaning vehicle 1 is seen from the front thereof. As a result, the upper cross member 51 moves to the left in the left-and-right direction of the vehicle body frame 10 relative to the lower cross member 52.

As a result of the upper cross member 51 moving in the way described above, the upper cross member 51 turns counterclockwise around the upper left leaning axis LUL that passes through the upper left leaning bearing portion 53a and the upper right leaning axis LUR that passes through the upper right leaning bearing portion 54a relative to the left side member 53 and the right side member 54, respectively, when the leaning vehicle 1 is seen from the front thereof. Similarly, the lower cross member 52 turns counterclockwise around the lower left leaning axis LDL that passes through the lower left leaning bearing portion 53b and the lower right leaning axis LDR that passes through the lower right leaning bearing portion 54b relative to the left side member 53 and the right side member 54, respectively, when the leaning vehicle 1 is seen from the front thereof. As a result, the left side member 53 and the right side member 54 lean to the left of the leaning vehicle 1 from the vertical direction while maintaining their postures that are parallel to the main pipe portion 21.

At this time, the lower cross member 52 moves to the left in the left-and-right direction of the vehicle body frame 10 relative to the tie rod 637. As a result of the lower cross member 52 moving in the way described above, the tie rod 637 turns relative to the intermediate joint 634, the left joint 635, and the right joint 636 around the intermediate joint leaning bearing portion 634b, the left joint leaning bearing portion 635b, and the right joint leaning bearing portion 636b, respectively. As a result of this, the tie rod 637 keeps its posture parallel to the upper cross member 51 and the lower cross member 52.

The left bracket 71, which is supported on the left side member 53 via the left turnable member, leans to the left of the leaning vehicle 1 as the left side member 53 leans to the left of the leaning vehicle 1. As the left bracket 71 leans so, the left shock absorbing device 72, which is supported on the left bracket 71, also leans to the left of the leaning vehicle 1. As a result of this, the left front wheel 3 supported on the left shock absorbing device 72 leans to the left of the leaning vehicle 1 while maintaining its posture parallel to the main pipe portion 21.

The right bracket 81, which is supported on the right side member 54 via the right tunable member, leans to the left of the leaning vehicle 1 as the right side member 54 leans to the left of the leaning vehicle 1. As the right bracket 81 leans so, the right shock absorbing device 82, which is supported on the right bracket 81, also leans to the left of the leaning vehicle 1. As a result of this, the right front wheel 2 supported on the right shock absorbing device 82 leans to the left of the leaning vehicle 1 while maintaining its posture parallel to the main pipe portion 21.

The leaning operations of the left front wheel 3 and the right front wheel 2 will be described based on the vertical direction. However, when the leaning vehicle 1 is operated to lean (when the link mechanism 5 is activated to operate), the up-and-down direction of the vehicle body frame 10 does not coincide with the vertical up-and-down direction. In the case where the up-and-down direction of the vehicle body frame 10 is regarded as the reference, when the link mechanism 5 is activated to operate, the left front wheel 3 and the right front wheel 2 change their relative position in the up-and-down direction of the vehicle body frame 10. In other words, the link mechanism 5 changes the relative position between the left front wheel 3 and the right front wheel 2 in the up-and-down direction of the vehicle body frame 10 to thereby cause the vehicle body frame 10 to lean to the left or right of the leaning vehicle 1 from the vertical direction. This causes the leaning vehicle 1 to turn to the left.

When the driver causes the leaning vehicle 1 to lean to the right, the relevant elements lean to the right. This causes the leaning vehicle 1 to turn to the right. Since the elements move simply in the opposite directions in the left-and-right direction, a detailed description of the movements of the elements when the driver so operates the handlebar 61 will be omitted here.

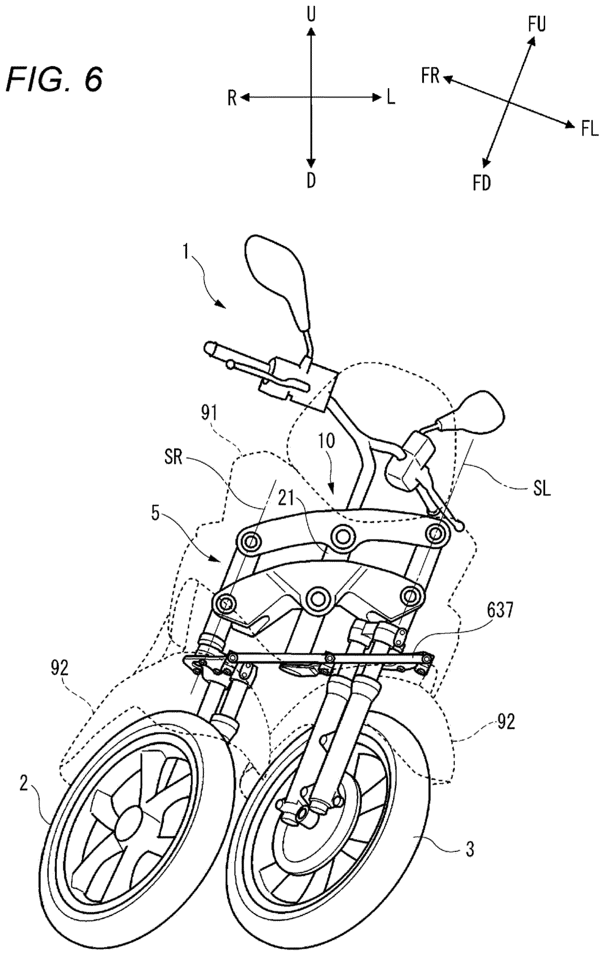

Fig. 6 is a front view of the front portion of the leaning vehicle 1 when seen from the front in the front-and rear direction of the vehicle body frame 10 with the leaning vehicle 1 caused to lean to the left and steered to turn to the left. Fig. 6 shows the front portion of the leaning vehicle 1 as seen through the front cover 91 and the two front fenders 92 which are shown by broken lines.

When the driver steers the leaning vehicle 1, the left front wheel 3 is turned counterclockwise around the left steering axis SL, while the right front wheel 2 is turned counterclockwise around the right steering axis SR. When the driver causes the leaning vehicle 1 to lean, the left front wheel 3 and the right front wheel 2 lean to the left of the leaning vehicle 1 together with the vehicle body frame 10. That is, in this state, the link mechanism 5 is exhibiting the shape of a parallelogram. The tie rod 637 has moved to the left in the left-and-right direction of the vehicle body frame 10 and to the rear in the front-and-rear direction of the vehicle body frame 10 from the position of the tie rod 637 that results when the vehicle body frame 10 stands upright.

Thus, as has been described heretofore, the leaning vehicle 1 according to this embodiment includes:
the vehicle body frame 10 configured to lean to the right of the leaning vehicle 1 when the leaning vehicle 1 turns to the right and lean to the left of the leaning vehicle 1 when the leaning vehicle 1 turns to the left;
the right front wheel 2 configured to rotate around the right axle member 823 that extends in the axial direction of the right axle;
the left front wheel 3 provided directly on the left of the right front wheel 2 with respect to the vehicle body frame 10 and configured to rotate around the left axle member 723 that extends in the axial direction of left axle;
the link mechanism 5 configured to change the relative position between the right front wheel 2 and the left front wheel 3 in the up-and-down direction of the vehicle body frame 10 as the vehicle body frame 10 leans;
the right shock absorbing device 82 configured to support the right front wheel 2 at the lower portion thereof and attenuate the relative displacement of the right front wheel 2 relative to the link mechanism 5;
the left shock absorbing device 72 configured to support the left front wheel 3 at the lower portion thereof and attenuate the relative displacement of the left front wheel 3 relative to the link mechanism 5; and
the steering mechanism 6.

The link mechanism 5 includes:
the right side member 54 configured to support the upper portion of the right shock absorbing device 82 in such a manner as to turn around the right steering axis SR; the left side member 53 configured to support the upper portion of the left shock absorbing device 72 in such a manner as to turn around the left steering axis SL;
the upper cross member 51 configured to support the upper portion of the right side member 54 at the right end portion in such a manner as to turn around the upper right leaning axis LUR that extends in the front-and-rear direction of the vehicle body frame 10, support the upper portion of the left side member 53 at the left end portion thereof in such a manner as to turn around the upper left leaning axis LUL that is parallel to the upper right leaning axis LUR, and be supported on the main pipe portion 21 at the intermediate portion thereof in such a manner as to turn around the upper intermediate leaning axis LUI that is parallel to the upper right leaning axis LUR; and
the lower cross member 52 configured to support the lower portion of the right side member 54 at the right end portion thereof in such a manner as to turn around the lower right leaning axis LDR that is parallel to the upper right leaning axis LUR, support the lower portion of the left side member 53 at the left end portion thereof in such a manner as to turn around the lower left leaning axis LDL that is parallel to the upper left leaning axis LUL, and be supported on the main pipe portion 21 at the intermediate portion thereof in such a manner as to turn around the lower intermediate leaning axis LDI that is parallel to the upper intermediate leaning axis LUI.

The steering mechanism 6 includes:
the handlebar 61 (an example of a steering force input portion) into which steering force is inputted;
the steering shaft 62 coupled to the handlebar 61 and configured to turn around the intermediate steering axis SI that extends in the up-and-down direction of the vehicle body frame 10; and
the steering force transmission mechanism 63 coupled to the steering shaft 62 and configured to transmit a turn of the steering shaft 62 to the right shock absorbing device 82 and the left shock absorbing device 72.

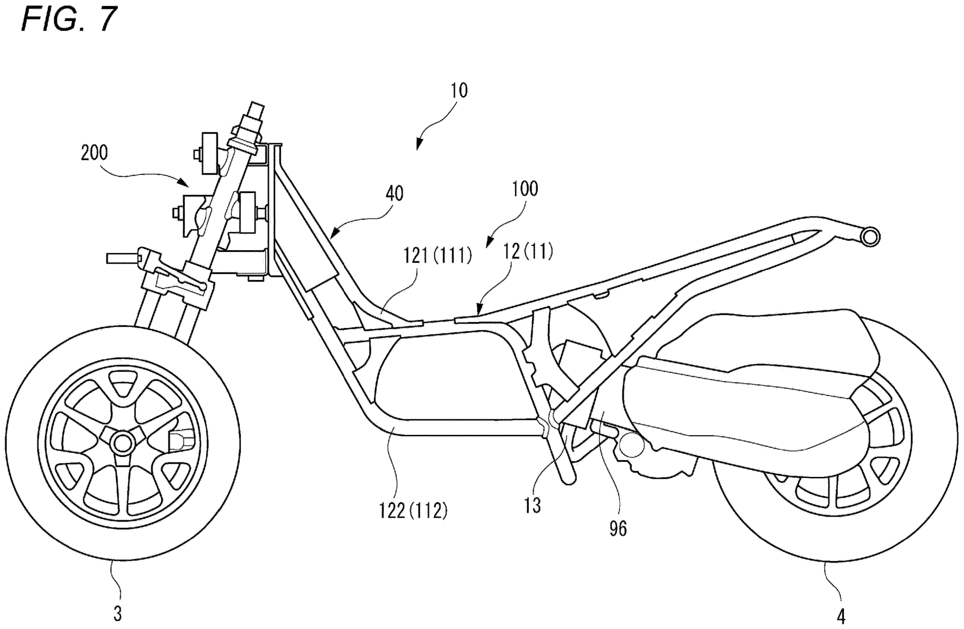

Fig. 7 shows the vehicle body frame 10 of the leaning vehicle 1 according to the embodiment. As shown in Fig. 7, the vehicle body frame 10 includes a vehicle body side monolithic body 100 and a link side monolithic body 200.

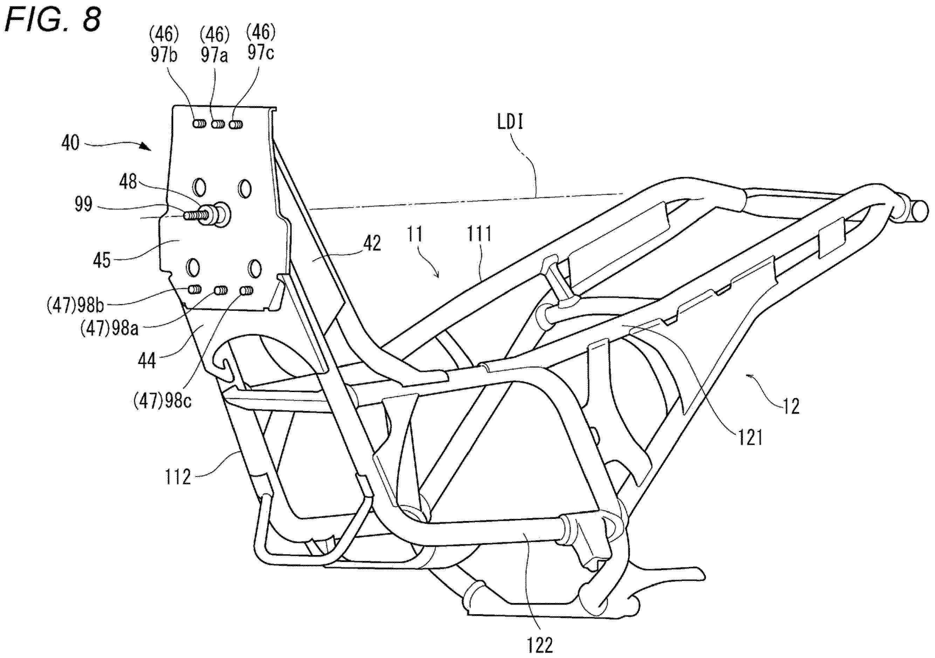

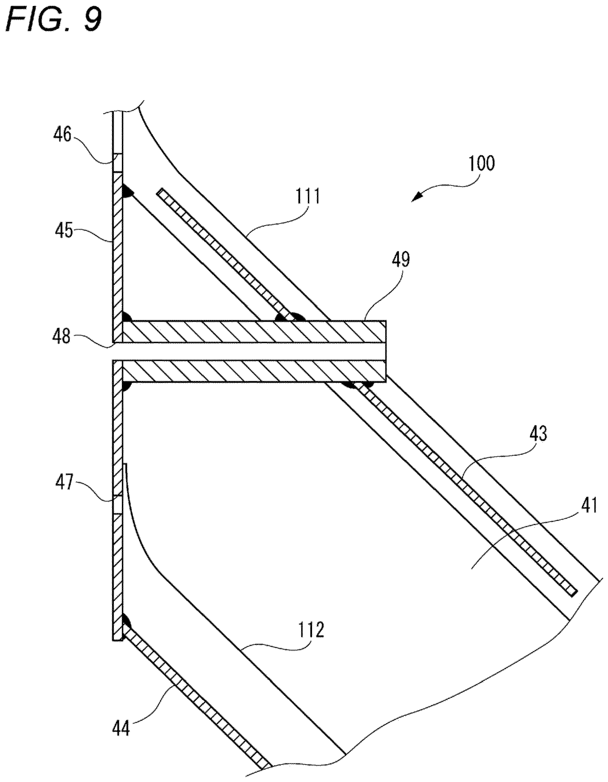

Fig. 8 is a perspective view showing the vehicle body side monolithic body 100. Fig. 9 is a cross-sectional view showing the vehicle body side monolithic body 100. In Figs. 9, 11, and 12, blackened areas denote welded portions. As shown in Fig. 8, the vehicle body side monolithic body 100 includes a right frame 11 that extends in the front-and-rear direction and a left frame 12 that extends in the front-and-rear direction.

The left frame 12 is provided on the left of the right frame 11. The right frame 11 includes a right upper frame 111 and a right lower frame 112 that is provided below the right upper frame 111. The left frame 12 includes a left upper frame 121 and a left lower frame 122 that is provided below the left upper frame 121.

The vehicle body side monolithic body 100 includes a power unit support portion 13. In this embodiment, the power unit support portion 13 supports the power unit 96 in such a manner as to turn relative to the vehicle body side monolithic body 100. In the illustrated example, the power unit support portion 13 is welded to the right lower frame 112 and the left lower frame 122.

As shown in Fig. 8, a front portion of the right frame 11 and a front portion of the left frame 12 are joined monolithically together into an integral object at a joining portion 40. The joining portion 40 includes a right plate portion 41 (refer to Fig. 9), a left plate portion 42, an upper plate portion 43 (refer to Fig. 9), a lower plate portion 44 and a front plate portion 45. These right plate portion 41, left plate portion 42, upper plate portion 43, lower plate portion 44 and front plate portion 45 are plate-like portions.

The right plate portion 41 is welded to the right upper frame 111 and the right lower frame 112. The left plate portion 42 is welded to the left upper frame 121 and the left lower frame 122. The upper plate portion 43 is welded to the right upper frame 111 and the left upper frame 121. The lower plate portion 44 is welded to the right lower frame 112 and the left lower frame 122. The front plate portion 45 is welded to a front end portion of the right upper frame 111, a front end portion of the right lower frame 112, a front end portion of the left upper frame 121 and a front end portion of the left lower frame 122. A normal direction of the front plate portion 45 is parallel to the lower intermediate leaning axis LDI.

In addition, as shown in Fig. 8, three upper bolt penetration holes 46 through which three upper bolts 97 penetrate are provided at an upper portion of the front plate portion 45. Three lower bolt penetration holes 47 through which three lower bolts 98 penetrate are provided at a lower portion of the front plate portion 45. An intermediate bolt through hole 48 (refer to Fig. 9) through which an intermediate bolt 99 penetrates is provided at a central portion of the front plate portion 45.

As shown in Fig. 9, the vehicle body side monolithic body 100 includes a bolt support portion 49 that is welded to the front plate portion 45 and the upper plate portion 43. The bolt support portion 49 extends in the front-and-rear direction. A front portion of the bolt support portion 49 is welded to the front plate portion 45, and a rear portion of the bolt support portion 49 is welded to the upper plate portion 43. An intermediate bolt penetration hole 48 through which an intermediate bolt 99 penetrates is provided in the bolt support portion 49. That is, the bolt support portion 49 is welded to the vehicle body side monolithic body 100 at two locations along an axial direction of the intermediate bolt 99.

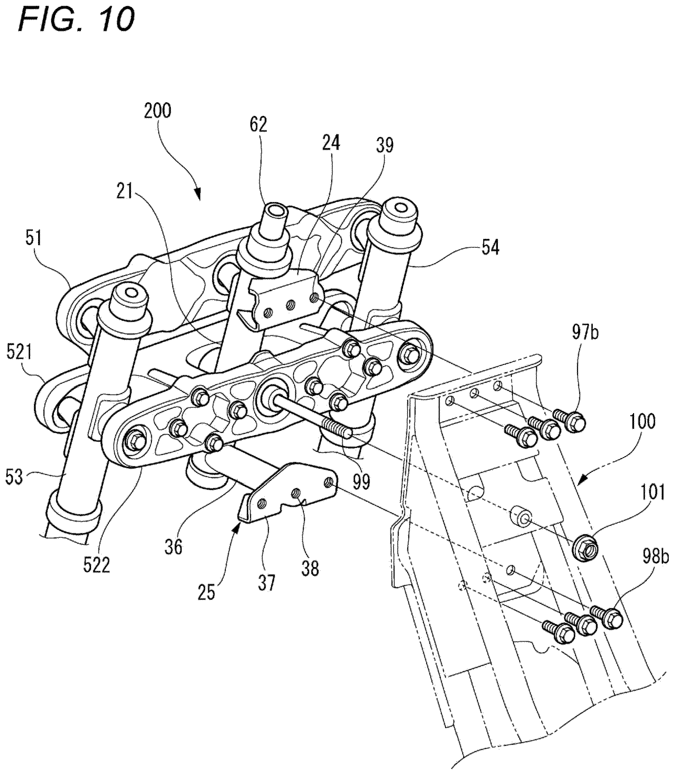

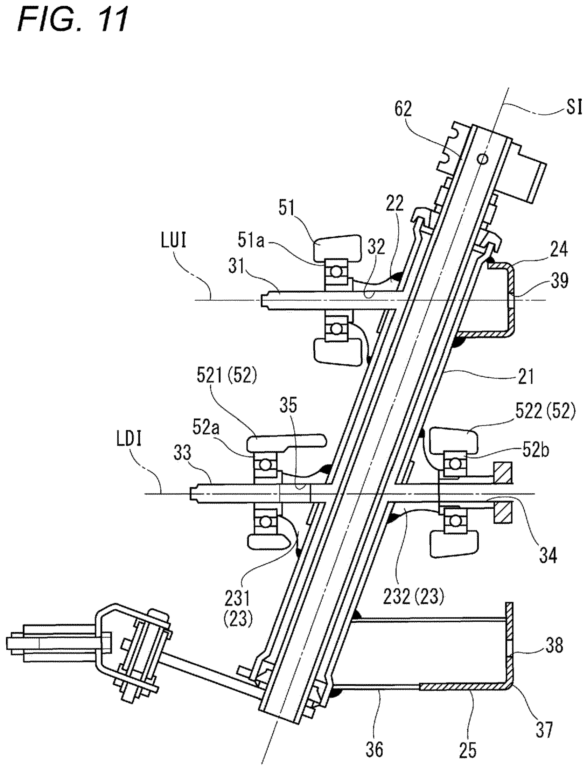

Fig. 10 is a perspective view showing a link side monolithic body 200. Fig. 11 is a cross-sectional view showing the link side monolithic body 200. As shown in Figs. 10 and 11, the main pipe portion 21, an upper boss portion 22 and a lower boss portion 23 are joined monolithically into an integral object at the link side monolithic body 200. The main pipe portion 21 supports the steering shaft 62 in such a manner as to turn around the intermediate steering axis SI. The upper boss portion 22 supports the intermediate portion of the upper cross member 51 in such a manner as to turn around the upper intermediate leaning axis LUI. The lower boss portion 23 supports the intermediate portion of the lower cross member 52 in such a manner as to turn around the lower intermediate leaning axis LDI. The upper boss portion 22 and the lower boss portion 23 are welded to the main pipe portion 21.

In addition, an upper bolt attachment portion 24 and a lower bolt attachment portion 25 are joined monolithically into an integral object at the link side monolithic body 200.

The upper bolt attachment portion 24 is a metallic plate that is bent into a U-like shape. The upper bolt attachment portion 24 is welded to a rear portion of the main pipe portion 21. Three bolt attachment holes 39 through which three upper bolts 97 penetrate individually are provided on the upper bolt attachment portion 24. The upper bolt attachment portion 24 is provided substantially at the same height as a height at which the upper boss portion 22 is provided in relation to the direction of the intermediate steering axis SI.

The lower bolt attachment portion 25 includes a pipe portion 36 and a plate-like portion 37 provided at a rear end of the pipe portion. A front end of the pipe portion 36 is welded to the rear portion of the main pipe portion 21. Three bolt attachment holes 38 through which three lower bolts 98 penetrate individually are provided on the plate-like portion 37. The lower bolt attachment portion 25 is provided substantially at the same height as a height at which the lower boss portion 23 is provided in relation to the direction of the intermediate steering axis SI.

The upper boss portion 22 and the lower boss portion 23 are joined monolithically into an integral object at the link side monolithic body 200. The lower boss portion 23 includes a lower front boss portion 231 configured to support the lower front cross element 521 in such a manner as to turn and a lower rear boss portion 232 configured to support the lower rear cross element 522 in such a manner as to turn.

The upper boss portion 22 is provided in such a manner as to project to the front from a front portion of the main pipe portion 21. An upper hole portion 32 into which an upper shaft member 31 is inserted is provided in the upper boss portion 22. The upper intermediate leaning axis LUI that constitutes a turning axis of the upper cross member 51 passes through this upper hole portion 32. The upper shaft member 31 projects to the front from the upper hole portion 32 and is fixed to an inner race of the upper intermediate leaning bearing portion 51a provided in the upper cross member 51. A center axis of the upper shaft member 31 coincides with the upper intermediate leaning axis LUI.

The lower boss portion 23 includes the lower front boss portion 231 and the lower rear boss portion 232.

The lower front boss portion 231 is provided in such a manner as to project to the front from the front portion of the main pipe portion 21. A lower front hole portion 35 into which a lower front shaft member 33 is inserted is provided in the lower front boss portion 231. The lower intermediate leaning axis LDI that constitutes a turning axis of the lower cross member 52 passes through this lower front hole portion 35. The lower front shaft member 33 projects to the front from the lower front hole portion 35 and is fixed to an inner race of a lower intermediate leaning bearing portion 52a provided in the lower front cross element 521. A center axis of the lower front shaft member 33 coincides with the lower intermediate leaning axis LDI.

The lower rear boss portion 232 is provided in such a manner as to project to the rear from the rear portion of the main pipe portion 21. A lower rear hole portion 34 into which the intermediate bolt 99 is inserted is provided in the lower rear boss portion 232. The lower intermediate leaning axis LDI that constitutes the turning axis of the lower cross member 52 passes through this lower rear hole portion 34. The intermediate bolt 99 projects to the rear from the lower rear hole portion 34 and is fixed to an inner race of a lower rear leaning bearing portion 52b provided in the lower rear cross element 522. A center axis of the intermediate bolt 99 coincides with the lower intermediate leaning axis LDI.

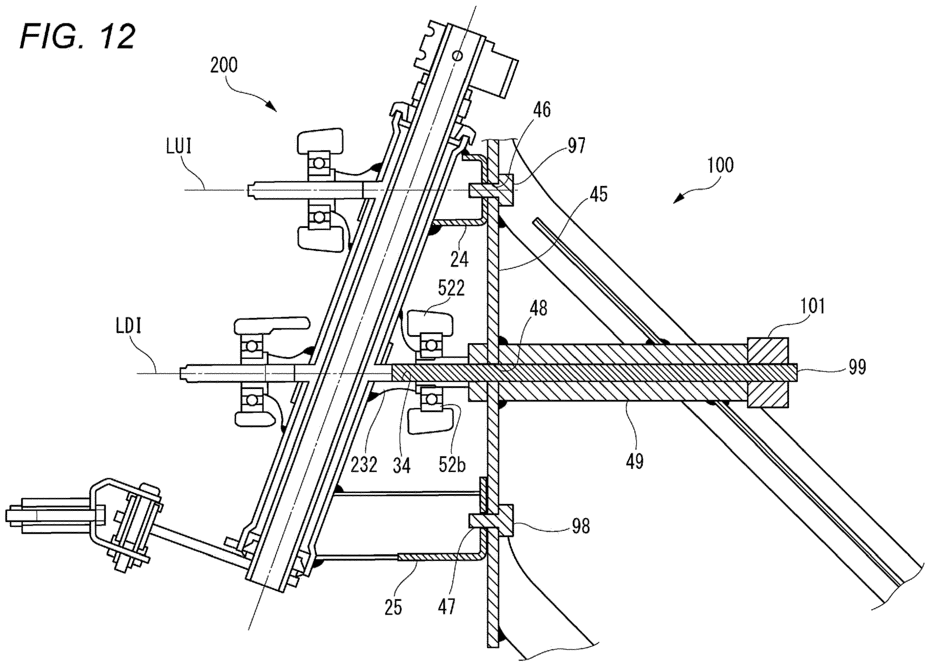

Fig. 12 is a cross-sectional view showing a joining portion where the vehicle body side monolithic body 100 and the link side monolithic body 200 are joined together. As shown in Fig. 12, the vehicle body side monolithic body 100 and the link side monolithic body 200 are coupled together with the upper bolts 97, the lower bolts 98 and the intermediate bolt 99.

The upper bolts 97 penetrate the front plate portion 45 of the vehicle body side monolithic body 100 and the upper bolt attachment portion 24 of the link side monolithic body 200. The lower bolts 98 penetrate the front plate portion 45 of the vehicle body side monolithic body 100 and the lower bolt attachment portion 25 of the link side monolithic body 200.

As shown in Fig. 8, in this embodiment, the upper bolts 97 include an upper intermediate bolt 97a that is positioned on the lower intermediate leaning axis LDI when seen from above, an upper right bolt 97b that is provided on the right of the lower intermediate leaning axis LDI when seen from above, and an upper left bolt 97c that is provided on the left of the lower intermediate leaning axis LDI when seen from above.

In this embodiment, the lower bolts 98 include a lower intermediate bolt 98a that is positioned on the lower intermediate leaning axis LDI when seen from above, a lower right bolt 98b that is provided on the right of the lower intermediate leaning axis LDI when seen from above, and a lower left bolt 98c that is provided on the left of the lower intermediate leaning axis LDI when seen from above.

The intermediate bolt 99 penetrates the lower rear hole portion 34 provided in the lower rear boss portion 232 provided on the link side monolithic body 200, the inner race of the lower rear leaning bearing portion 52b of the lower rear cross element 522, and the bolt support portion 49 of the vehicle body side monolithic body 100. The intermediate bolt 99 is a stud bolt. A front portion of the intermediate bolt 99 is screwed into the lower rear hole portion 34. A rear portion of the intermediate bolt 99 projects to the rear from the bolt support portion 49. A nut 101 is fittingly screwed on a rear end of the intermediate bolt 99 that projects to the rear from the bolt support portion 49. When seen from above, the intermediate bolt 99 is provided on the lower intermediate leaning axis LDI.

With the leaning vehicle 1 according to this embodiment, the link side monolithic body 200 configured to support the link mechanism 5 and the steering shaft 62 turnably is fastened to the vehicle body side monolithic body 100 with the bolts 97 to 99, whereby the deformation of the upper boss portion 22 and the lower boss portion 23 at the time of welding is avoided.

In this description, a description reading that a member A and a member B are joined monolithically into an integral object is often made, and this description means a form in which a metallic member A and a metallic member B are connected so that the member A and the member B are continuous via metallic material. For example, in the case where the member A and the member B are connected together through welding, they are regarded as an integral object in which the member A and the member B are joined monolithically. In the case where the member A and the member B are molded together continuously through casting, they are also regarded as an integral object in which the member A and the member B are joined monolithically. Being different from this structure, in the case where the member A and the member B are connected together with a fastening means such as a bolt, they are not regarded as an integral object in which the member A and the member B are joined monolithically because there is generated a gap between the member A and the member B.

In general, a structure in which a member A and a member B are joined monolithically into one body tends to have higher strength than a structure in which the member A and the member B are connected with the fastening means. In this invention, the structures on the vehicle body side are put together as the vehicle body side monolithic body 100 to enhance the strength thereof, and the structures for supporting the link mechanism 5 and the steering shaft 62 are put together as the link side monolithic body 200 to enhance the strength thereof. Then, these solid structures whose strengths are enhanced as described above are joined together with the bolts, and by adopting this joining means the strength of the whole of the vehicle is enhanced while ensuring the assembling easiness.

When external force is applied to the link mechanism 5 by way of the right front wheel 2 and the left front wheel 3, force is applied to the link side monolithic body 200, the force attempting to twist the link side monolithic body 200 around the center axis of the main pipe portion 21. The link side monolithic body 200 is strongly and rigidly coupled to the vehicle body side monolithic body 100 with the three upper bolts 97, the three lower bolts 98, and the intermediate bolt 99 against the force applied. As a result, the link side monolithic body 200 is supported strongly and rigidly by the vehicle body side monolithic body 100.

In addition, the vehicle body side monolithic body 100 can be designed into any shape, provided that the right frame 11 and the left frame 12 of the vehicle body frame 10 are joined monolithically into an integral object. As a result, for example, the invention is advantageous in attempting to provide a new vehicle by use of a newly designed link mechanism 5 and the vehicle body frame 10 of the existing leaning vehicle 1. Being different from the invention, in the case where the vehicle body frame 10 is welded to the main pipe portion 21, the vehicle body frame 10 of the existing leaning vehicle 1 needs to be redesigned to match the newly designed link mechanism 5. According to the invention, a new vehicle can be provided relatively easily by forming the vehicle body side monolithic body 100 on the vehicle body frame 10 of the existing leaning vehicle 1 and designing a link side monolithic body 200 suitable for the newly designed link mechanism 5.

In the leaning vehicle 1 according the embodiment, the lower cross member 52 includes the lower rear cross element 522 that is positioned behind the link side monolithic body 200, the lower boss portion 23 includes the lower rear hole portion 34 where the lower rear shaft member configured to support the lower rear cross element 522 in such a manner as to turn around the lower intermediate leaning axis LDI is supported, and the intermediate bolt 99 is supported in the lower rear hole portion 34.

With the leaning vehicle 1 according to the embodiment, the intermediate bolt 99 can be provided in the position where the intermediate bolt 99 does not interfere with the lower cross member 52 and the vehicle body frame 10 is prevented from being enlarged in the up-and-down direction in size.

In the leaning vehicle 1 according to the embodiment, the intermediate bolt 99 extends from the lower rear hole portion 34, penetrates the lower rear cross element 522 and is fastened to the vehicle body side monolithic body 100.

With the leaning vehicle 1 according to the embodiment, the intermediate bolt 99 can be provided in the position where the intermediate bolt 99 does not interfere with the lower cross member 52 and the vehicle body frame 10 is prevented from being enlarged in the up-and-down direction in size.

In the leaning vehicle 1 according to the embodiment, the intermediate bolt 99 extends along the lower intermediate leaning axis LDI.

With the leaning vehicle 1 according to the embodiment, the intermediate bolt 99 can be provided in the position where the intermediate bolt 99 does not interfere with the lower cross member 52 and the vehicle body frame 10 is prevented from being enlarged in the up-and-down direction in size.

In the leaning vehicle 1 according to the embodiment, the bolt support portion 49 (an example of a first fastening portion) into which the intermediate bolt 99 is inserted is joined monolithically to the vehicle body side monolithic body 100 into an integral object, and the bolt support portion 49 is fixed to the vehicle body frame 10 at the plurality of locations in the axial direction of the intermediate bolt 99.

In the leaning vehicle 1 according to the embodiment, when the force attempting to twist the link side monolithic body 200 is applied, bending force is applied to the intermediate bolt 99. Since the bolt support portion 49 is supported at the plurality of locations along the axial direction of the intermediate bolt 99, even though the bending force is applied to the bolt support portion 49 by way of the intermediate bolt 99, the bolt support portion 49 can be supported strongly and rigidly.

In the leaning vehicle 1 according to the embodiment, the front plate portion 45 (an example of a plate-like portion) whose normal direction is parallel to the lower intermediate leaning axis LDI is joined monolithically to the vehicle body side monolithic body 100 into an integral object.

With the leaning vehicle 1 according to the embodiment, since the front plate portion 45 is in contact with the link side monolithic body 200 over a surface, the front plate portion 45 easily bears great force. In addition, since the planar front plate portion 45 is in contact with the link side monolithic body 200, the front plate portion 45 can be connected to the link side monolithic body 200 with good accuracy.

The leaning vehicle 1 according to the embodiment includes at least either of the upper bolts 97 that are provided above the lower cross member 52 and are provided on the right and left of the lower intermediate leaning axis LDI and the lower bolts 98 that are provided below the lower cross member 52 and are provided on the right and left of the lower intermediate leaning axis LDI.

With the leaning vehicle 1 according to the embodiment, the link side monolithic body 200 is coupled to the vehicle body side monolithic body 100 with at least either (in the embodiment, both) of the upper bolts 97 and the lower bolts 98 and the intermediate bolt 99. As a result, for example, even when both the right front wheel 2 and the left front wheel 3 ride on a step, whereby force is applied to the link side monolithic body 200, the force attempting to push rearwards a lower portion while pushing forwards an upper portion of the link side monolithic body 200, the force can be borne by at least either of the upper bolts 97 and the lower bolts 98 and the intermediate bolt 99.

In the leaning vehicle 1 according to the embodiment, the upper cross member 51 is provided ahead of the link side monolithic body 200, and the upper bolts are provided behind the link side monolithic body 200 in a position where the upper bolts 97 overlap the upper cross member 51 in a front view of the leaning vehicle 1.

With the leaning vehicle 1 according to the embodiment, the force with which the upper front cross element pushes the link side monolithic body 200 to the rear can effectively be borne by the upper bolts 97. In addition, since the upper bolts 97 can be disposed by making use of a space defined on the opposite side to the side where the upper front cross element is provided across the main pipe portion 21 of the link side monolithic body 200, the leaning vehicle 1 can be prevented from being enlarged in size.

In the leaning vehicle 1 according to the embodiment,
the right frame 11 includes:
the right upper frame 111 that extends in the front-and-rear direction; and
the right lower frame 112 that extends in the front-and-rear direction and is positioned below the right upper frame 111,
the left frame 12 includes:
the left upper frame 121 that extends in the front-and-rear direction; and
the left lower frame 122 that extends in the front-and-rear direction and is positioned below the left upper frame 121, and
the right upper frame 111, the right lower frame 112, the left upper frame 121, and the left lower frame 122 are joined monolithically to the vehicle body side monolithic body 100 into the integral object.

With the leaning vehicle 1 according to the embodiment, the right upper frame 111, the right lower frame 112, the left upper frame 121, and the left lower frame 122 are joined monolithically into the single vehicle body side monolithic body 100 As a result, since the strength of the vehicle body side monolithic body 100 is enhanced, whereby the vehicle body side monolithic body 100 can easily bear the force inputted from the link side monolithic body 200.

In the leaning vehicle 1 according to the embodiment,
the upper cross member 51 is positioned ahead of the main pipe portion 21,
the lower cross member 52 includes the lower front cross element 521 that is positioned ahead of the main pipe portion 21 and the lower rear cross element 522 that is positioned behind the link support portion, and
the upper boss portion 22 configured to support the upper shaft member 31 configured to support the upper cross member 51 in such a manner as to turn around the upper intermediate leaning axis LUI, the lower front boss portion 231 configured to support the lower front shaft member 33 configured to support the lower front cross element 521 in such a manner as to turn around the lower intermediate leaning axis LDI, and the lower rear boss portion 232 configured to support the lower rear shaft member configured to support the lower rear cross element 522 in such a manner as to turn around the lower intermediate leaning axis LDI are joined monolithically to the link side monolithic body 200 into the integral object.

In the leaning vehicle 1 according to the embodiment, greater force tends to act on the lower cross member 52 than the upper cross member 51. Then, the rigidity of the lower cross member 52 is enhanced by making up the lower cross member 52 of the lower front cross element 521 and the lower rear cross element 522.

In addition, in the embodiment described above, the upper cross member 51 is described as being provided ahead of the main pipe portion 21, the lower cross member 52 is described as including the lower front cross element 521 that is provided ahead of the main pipe portion 21 and the lower rear cross element 522 that is provided behind the main pipe portion 21, and the intermediate bolt 99 is described as penetrating the lower rear cross element 522 to be fastened to the link side monolithic body and the vehicle body side monolithic body. The invention is not limited to this structure.

The upper cross member may include an upper front cross element that is provided ahead of the main pipe portion 21 and an upper rear cross element that is provided behind the main pipe portion 21, and the lower cross member 52 may be provided ahead of the main pipe portion 21. In this case, the intermediate bolt is configured to penetrate the upper rear cross element to be fastened to the link side monolithic body and the vehicle body side monolithic body.

Alternatively, the upper cross member may include an upper front cross element that is provided ahead of the main pipe portion 21 and an upper rear cross element that is provided behind the main pipe portion 21, and the lower cross member 52 may include the lower front cross element 521 that is provided ahead of the main pipe portion 21 and the lower rear cross element 522 that is provided behind the main pipe portion 21. In this case, a configuration can be adopted in which the link side monolithic body and the vehicle body side monolithic body are fastened together by at least one of an upper intermediate bolt that penetrates the upper rear cross element and a lower intermediate bolt that penetrates the lower rear cross element 522.

In the embodiment, the leaning vehicle 1 includes the two front wheels 2, 3 and the one rear wheel 4. However, the leaning vehicle 1 may include a plurality of rear wheels

The rear wheel 4 is disposed behind the left front wheel 3 and the right front wheel 2 in the front-and-rear direction of the vehicle body frame 10. In addition to or in place of the rear wheel 4, at least one wheel can be provided which is disposed behind the left front wheel 3 and the right front wheel 2 in the front-and-rear direction of the vehicle body frame 10. In this case, a driving force from the power source of the power unit 96 can be supplied to at least one of the left front wheel 3, the right front wheel 2, and the wheel so provided.

In the embodiment described above, the handlebar 61 is made up of the single member that extends in the left-and-right direction of the vehicle body frame. However, a configuration can be adopted in which the handlebar 61 is made up of separate members including a left handlebar portion configured to be operated by the left hand of the driver and a right handlebar portion configured to be operated by the right hand of the driver, provided that steering force to turn the left front wheel 3 and the right front wheel 2 can be inputted through the separate members or the left and right handlebar portions.

A configuration can be adopted in which a cross member other than the upper cross member 51 and the lower cross member 52 is provided. The "upper cross member" and the "lower cross member" are merely so called based on their relative positional relationship in the up-and-down direction. The upper cross member does not mean an uppermost cross member in the link mechanism 5. The upper cross member means a cross member which lies above another cross member which lies therebelow The lower cross member does not mean a lowermost cross member in the link mechanism 5 The lower cross member means a cross member which lies below another cross member which lies thereabove

In the configuration described above, the upper front cross member, the lower front cross member, and the lower rear cross member are each described as being made up of the single member including integrally the right end potion configured to support the upper portion of the right side portion, the left end portion configured to support the upper portion of the left side portion, and the intermediate portion configured to be supported on the link side monolithic body. The invention is not limited to this configuration. A configuration may be adopted in which at least one of the upper front cross member, the lower front cross member, and the lower rear cross member is made up of the single member including integrally the right end portion configured to support the upper portion of the right side portion, the left end portion configured to support the upper portion of the left side portion, and the intermediate portion configured to be supported on the link side monolithic body, while the other members of the upper front cross member, the lower front cross member and the lower rear cross member are each made up of a right portion configured to support the upper portion of the right side portion and a left portion configured to support the upper portion of the left side portion which is independent of the right portion.

The terms and expressions that are used in the description of this patent application are used to describe the embodiment of the invention and hence should not be construed as limiting the scope of the invention. It should be recognized that any equivalents to the characteristic matters that are shown and described in this description should not be excluded and that various modifications made within the scope of claims to be made later are permitted.

When the word of "parallel" is used in the description of this patent application, it means that "parallel" also includes two straight lines which do not intersect each other as members while they are inclined within an angular range of ± 40 degrees. When "along" is used in relation to a direction or a member in the description of this patent application , it means that a case is also included where the direction or the member is inclined within an angular range of ± 40 degrees. When the expression reading "something extends in a certain direction" is used in the description of this patent application, it means that a case is also included where something extends in the certain direction while being inclined within an angular range of ± 40 degrees with respect to the certain direction.

In the description of this patent application, in the case where a certain part of member is described as being "disposed in such a manner as not to be displaced relative to the body frame 10", the description implies that the certain part or member is caused to lean in the left-and-right direction of the leaning vehicle 1 together with the vehicle body frame 10 when the body frame 10 is caused to lean in the left-and-right direction of the leaning vehicle 1. In the description of this patent application, in the case where a certain part or member is expressed as being "disposed in such a manner as not to be displaced relative to the vehicle body frame 10",the expression includes not only a case where the certain part or member is fixed directly to the vehicle body frame 10 but also a case where the certain part or member is fixed to a vehicle part (a fuel tank, a bracket, a power unit or the like) that is fixed to the vehicle body frame 10. Here, "fixing" includes fixing via a damper member or the like.

This patent application is based on Japanese Patent Application( No. 2018-167913) filed on September 7, 2018.

### [Industrial Applicability]

According to the invention, the leaning vehicle with two front wheels is provided in which the link support portion can be assembled to the vehicle body frame without involving welding.

### [Description of Reference Signs]

- 1: LEANING VEHICLE
- 2: Right front wheel
- 3: Left front wheel
- 4: Rear wheel
- 5: Link mechanism
- 6: Steering mechanism
- 7: Left suspension unit
- 8: Right suspension unit
- 10: Vehicle body frame
- 11: Right frame
- 12: Left frame
- 13: Power unit support portion
- 21: Main pipe portion
- 21b: Lower intermediate leaning bearing portion
- 22: Upper boss portion
- 23: Lower boss portion
- 24: Upper bolt attachment portion
- 25: Lower bolt attachment portion
- 31: Upper shaft member
- 32: Upper hole portion
- 33: Lower front shaft member
- 34: Lower rear hole portion
- 35: Lower front hole portion
- 36: Pipe portion
- 37: Plate-like portion
- 38: Bolt attachment hole
- 39: Bolt attachment hole
- 40: Fastening portion
- 41: Right plate portion
- 42: Left plate portion
- 43: Upper plate portion
- 44: Lower plate portion
- 45: Front plate portion
- 46: Upper bolt penetration hole
- 47: Lower bolt penetration hole
- 48: Intermediate bolt penetration hole
- 49: Bolt support portion
- 51: Upper cross member
- 51a: Upper intermediate leaning bearing portion
- 52: Lower cross member
- 52a: Lower intermediate leaning bearing portion
- 52b: Lower rear leaning bearing portion
- 53: Left side member
- 53a: Upper left leaning bearing portion
- 53b: Lower left leaning bearing portion
- 54: Right side member
- 54a: Upper right leaning bearing portion
- 54b: Lower right leaning bearing portion
- 61: Handlebar
- 62: Steering shaft
- 63: Steering force transmission mechanism
- 71: Left bracket
- 72: Left shock absorbing device
- 81: Right bracket
- 82: Right shock absorbing device
- 90: Vehicle body cover
- 91: Front cover
- 92: Front fender
- 93: Rear fender
- 94: Leg shield
- 95: Seat
- 96: Power unit
- 97: Upper bolt
- 97a: Upper Intermediate bolt
- 97b: Upper right bolt
- 97c: Upper left bolt
- 98: Lower bolt
- 98a: Lower Intermediate bolt
- 98b: Lower right bolt
- 98c: Lower left bolt
- 99: Intermediate bolt
- 100: Vehicle body side monolithic body
- 101: Nut
- 111: Right upper frame
- 112: Right lower frame
- 121: Left upper frame
- 122: Left lower frame
- 200: Link side monolithic body
- 231: Lower front boss portion
- 232: Lower rear boss portion
- 521: Lower front cross element
- 522: Lower rear cross element
- 631: Intermediate transmission plate
- 632: Left transmission plate
- 633: Right transmission plate
- 634: Intermediate joint
- 634a: Intermediate joint steering bearing portion
- 634b: Intermediate joint leaning bearing portion
- 635: Left joint
- 635a: Left joint steering bearing portion
- 635b: Left joint leaning bearing portion
- 636: Right joint
- 636a: Right joint steering bearing portion
- 636b: Right joint leaning bearing portion
- 637: Tie rod
- 721: Left upper telescopic element
- 722: Left lower telescopic element
- 723: Left axle member
- 821: Right upper telescopic element
- 822: Right lower telescopic element
- 823: Right axle member
- LDI: Lower intermediate leaning axis
- LDL: Lower left leaning axis
- LDR: Lower right leaning axis
- LUI: Upper intermediate leaning axis
- LUL: Upper left leaning axis
- LUR: Upper right leaning axis
- SI: Intermediate steering axis
- SL: Left steering axis
- SR: Right steering axis

## Claims

1. A leaning vehicle comprising:
a vehicle body frame (10) configured to lean to a right side of the leaning vehicle when the leaning vehicle takes a right turn and to lean to a left side of the leaning vehicle when the leaning vehicle takes a left turn;
a right front wheel (2) configured to rotate around a right axle member (823) that extends in a right axle axis direction;
a left front wheel (3) provided directly on a left of the right front wheel (2) with respect to the vehicle body frame (10) and configured to rotate around a left axle member (723) that extends in a left axle axis direction;
a link mechanism (5) configured to change a relative position between the right front wheel (2) and the left front wheel (3) in an up-and-down direction of the vehicle body frame (10) as the vehicle body frame (10) leans;
a right shock absorbing device (82) configured to support the right front wheel (2) at a lower portion thereof and attenuate a relative displacement of the right front wheel (2) to the link mechanism (5);
a left shock absorbing device (72) configured to support the left front wheel (3) at a lower portion thereof and attenuate a relative displacement of the left front wheel (3) to the link mechanism (5);
a power unit support portion (13) configured to support a power unit (96) on the vehicle body frame (10); and
a steering mechanism (6),
wherein the vehicle body frame (10) comprises:
a right frame (11) extending in a front-and-rear direction and a left frame (12) provided on the left of the right frame (11) and extending in the front-and-rear direction; and
a link side monolithic body (200),
wherein the link mechanism (5) comprises:
a right side member (54) configured to support an upper portion of the right shock absorbing device (82) in such a manner as to turn around a right steering axis (SR) that extends in the up-and-down direction of the vehicle body frame (10);
a left side member (53) configured to support an upper portion of the left shock absorbing device (72) in such a manner as to turn around a left steering axis (SL) that is parallel to the right steering axis (SR);
an upper cross member (51) configured to support an upper portion of the right side member (54) at a right end portion thereof in such a manner as to turn around an upper right leaning axis (LUR) that extends in the front-and rear direction and support an upper portion of the left side member (53) at a left end portion thereof in such a manner as to turn around an upper left leaning axis (LUL) that is parallel to the upper right leaning axis (LUR) and configured to be supported on the link side monolithic body (200) at an intermediate portion thereof in such a manner as to turn around an upper intermediate leaning axis (LUI) that is parallel to the upper right leaning axis (LUR); and
a lower cross member (52) configured to support a lower portion of the right side member (54) at a right end portion thereof in such a manner as to turn around a lower right leaning axis (LDR) that is parallel to the upper right leaning axis (LUR) and support a lower portion of the left side member (53) at a left end portion thereof in such a manner as to turn around a lower left leaning axis (LDL) that is parallel to the upper left leaning axis (LUL) and
configured to be supported on the link side monolithic body (200) at an intermediate portion thereof in such a manner as to turn around a lower intermediate leaning axis (LDI) that is parallel to the upper intermediate leaning axis (LUI);
wherein the steering mechanism (6) comprises:
a steering force input portion (61) into which steering force is inputted;
a steering shaft (62) coupled to the steering force input portion (61) and configured to rotate around an intermediate steering axis (SI) that extends in the up-and-down direction of the vehicle body frame (10); and
a steering force transmission mechanism (63) coupled to the steering shaft (62) and
configured to transmit a rotation of the steering shaft (62) to the right shock absorbing device (82) and the left shock absorbing device (72),
wherein a main pipe portion (21) configured to support the steering shaft (62) in such a manner as to turn around the intermediate steering axis (SI), an upper boss portion (22) configured to support the intermediate portion of the upper cross member (51) in such a manner as to turn around the upper intermediate leaning axis (LUI), and a lower boss portion (23) configured to support the intermediate portion of the lower cross member (52) in such a manner as to turn around the lower intermediate leaning axis (LDI) are monolithically joined together into an integral object at the link side monolithic body (200),
**characterized in that**
the vehicle body frame (10) comprises a vehicle body side monolithic body (100) of an integral object into which the right frame (11) and the left frame (12) are monolithically joined, and on which the power unit support portion (13) is provided, and the link side monolithic body (200) is fastened to the vehicle body side monolithic body (100) with a bolt (97, 98, 99).

2. The leaning vehicle according to claim 1, **characterized in that** the lower cross member (52) comprises a lower rear cross element (522) that is positioned behind the link side monolithic body (200),
wherein the lower boss portion (23) comprises a lower rear hole portion (34) where a lower rear shaft member configured to support the lower rear cross element (522) in such a manner as to turn around the lower intermediate leaning axis (LDI) is supported, and wherein the bolt (99) is supported in the lower rear hole portion (34).

3. The leaning vehicle according to claim 2, **characterized in that** the bolt (99) extends from the lower rear hole portion (34), penetrates the lower rear cross element (522) and is fastened to the vehicle body side monolithic body (100).

4. The leaning vehicle according to claim 2, **characterized in that** the bolt (99) extends along the lower intermediate leaning axis (LDI).

5. The leaning vehicle according to claim 2, **characterized in that** a first fastening portion (49) into which the bolt (99) is inserted is joined to the vehicle body side monolithic body (100) into an integral object, and
wherein the first fastening portion (49) is fixed to the vehicle body frame (10) at a plurality of locations in an axial direction of the bolt (99).

6. The leaning vehicle according to claim 1, **characterized in that** a plate-like portion (45) whose normal direction is parallel to the lower intermediate leaning axis (LDI) is joined monolithically to the vehicle body side monolithic body (100) into an integral object.

7. The leaning vehicle according to claim 1, **characterized by**: at least either of;
upper bolts (97) that are provided above the lower cross member (52) and are provided on the right and left of the lower intermediate leaning axis (LDI) and
lower bolts (98) that are provided below the lower cross member (52) and are provided on the right and left of the lower intermediate leaning axis (LDI).

8. The leaning vehicle according to claim 7, **characterized in that** the upper cross member (51) is provided ahead of the link side monolithic body (200), and
wherein the upper bolt (97) is provided behind the link side monolithic body (200) in a position where the bolt (97) overlaps the upper cross member (51) in a front view of the leaning vehicle.

9. The leaning vehicle according to claim 1, **characterized in that** the right frame (11) comprises:
a right upper frame (111) that extends in the front-and-rear direction; and
a right lower frame (112) that extends in the front-and-rear direction and is positioned below the right upper frame (111),
wherein the left frame (12) comprises:
a left upper frame (121) that extends in the front-and-rear direction; and
a left lower frame (122) that extends in the front-and-rear direction and is positioned below the left upper frame (121), and
wherein the right upper frame (111), the right lower frame (112), the left upper frame (121),
and the left lower frame (122) are joined monolithically to the vehicle body side monolithic body (100) into an integral object.

10. The leaning vehicle according to claim 1, **characterized in that** the upper cross member (51) is positioned ahead of the main pipe portion (21),
wherein the lower cross member (52) comprises a lower front cross element (521) that is positioned ahead of the main pipe portion (21) and a lower rear cross element (522) that is positioned behind the main pipe portion (21), and
wherein the upper boss portion (22) configured to support an upper shaft member (31) configured to support the upper cross member (51) in such a manner as to turn around the upper intermediate leaning axis (LUI), a lower front boss portion (231) configured to support a lower front shaft member (33) configured to support the lower front cross element (521) in such a manner as to turn around the lower intermediate leaning axis (LDI), and a lower rear boss portion (232) configured to support a lower rear shaft member configured to support the lower rear cross element (522) in such a manner as to turn around the lower intermediate leaning axis (LDI) are joined monolithically to the link side monolithic body (200) into an integral object.

## Patentansprüche

1. Ein Neige-Fahrzeug, das umfasst:
einen Fahrzeug-Körper-Rahmen (10), der konfiguriert ist, um sich zu einer rechten Seite von dem Neige-Fahrzeug zu neigen, wenn das Neige-Fahrzeug eine Rechtskurve nimmt, und sich zu einer linken Seite von dem Neige-Fahrzeug zu neigen, wenn das Neige-Fahrzeug eine Linkskurve nimmt;
ein rechtes Vorder-Rad (2), das konfiguriert ist, um sich um ein rechtes Achsen-Element (823) zu drehen, das sich in einer Rechts-Achsachs-Richtung erstreckt;
ein linkes Vorder-Rad (3), das in Bezug auf den Fahrzeug-Körper-Rahmen (10) direkt links von dem rechten Vorder-Rad (2) vorgesehen ist und konfiguriert ist, um sich um ein linkes Achsen-Element (723) zu drehen, das sich in einer Links-Achsachs-Richtung erstreckt;
einen Lenker-Mechanismus (5), der konfiguriert ist, um eine relative Position zwischen dem rechten Vorder-Rad (2) und dem linken Vorder-Rad (3) in einer Auf-und-Ab-Richtung des Fahrzeug-Körper-Rahmens (10) zu ändern, wenn sich der Fahrzeug-Körper-Rahmen (10) neigt;
eine rechte stoßdämpfende Vorrichtung (82), die konfiguriert ist, um das rechte Vorder-Rad (2) an einem unteren Abschnitt desselben zu lagern und eine relative Verschiebung des rechten Vorder-Rads (2) gegenüber dem Lenker-Mechanismus (5) zu dämpfen;
eine linke stoßdämpfende Vorrichtung (72), die konfiguriert ist, um das linke Vorder-Rad (3) an einem unteren Abschnitt desselben zu lagern und eine relative Verschiebung des linken Vorder-Rads (3) gegenüber dem Lenker-Mechanismus (5) zu dämpfen;
einen Leistungs-Einheit-Lager-Abschnitt (13), der konfiguriert ist, um eine Leistungs-Einheit (96) an dem Fahrzeug-Körper-Rahmen (10) zu lagern; und
einen Lenk-Mechanismus (6),
wobei der Fahrzeug-Körper-Rahmen (10) umfasst:
einen rechter Rahmen (11), der sich in einer Vorder-und-Rück-Richtung erstreckt,
und einen linker Rahmen (12), der links von dem rechten Rahmen (11) vorgesehen ist und sich in der Vorder-und-Rück-Richtung erstreckt; und
einen Lenker-Seite-Monolith-Körper (200),
wobei der Lenker-Mechanismus (5) umfasst:
ein rechtes Seiten-Element (54), das konfiguriert ist, um einen oberen Abschnitt der rechten stoßdämpfenden Vorrichtung (82) zu lagern, so dass es sich um eine rechte Lenk-Achse (SR) dreht, die sich in der Auf-und-Ab-Richtung des Fahrzeug-Körper-Rahmens (10) erstreckt;
ein linkes Seiten-Element (53), das konfiguriert ist, um einen oberen Abschnitt der linken stoßdämpfenden Vorrichtung (72) zu lagern, so dass es sich um eine linke Lenk-Achse (SL) dreht, die parallel zur rechten Lenk-Achse (SR) verläuft;
ein oberes Quer-Element (51), das konfiguriert ist, um einen oberen Abschnitt des rechten Seiten-Elements (54) an einem rechten Endabschnitt desselben zu lagern, so dass es sich um eine obere rechte Neigungs-Achse (LUR) dreht, die sich in der Vorder-und-Rück-Richtung erstreckt, und einen oberen Abschnitt des linken Seiten-Elements (53) an einem linken Endabschnitt desselben in einer Weise zu lagern, so dass es sich um eine obere linke Neigungs-Achse (LUL) dreht, die parallel zu der oberen rechten Neigungs-Achse (LUR) ist, und konfiguriert ist, um auf dem Lenker-Seite-Monolith-Körper (200) an einem Zwischen-Abschnitt desselben in einer solchen Weise gelagert zu werden, so dass es sich um eine obere Zwischen-Neigungs-Achse (LUI) dreht, die parallel zu der oberen rechten Neigungs-Achse (LUR) ist; und
ein unteres Quer-Element (52), das konfiguriert ist, um einen unteren Abschnitt des rechten Seiten-Elements (54) an einem rechten Endabschnitt desselben zu lagern, so dass es sich um eine untere rechte Neigungs-Achse (LDR) dreht, die parallel zu der oberen rechten Neigungs-Achse (LUR) ist, und einen unteren Abschnitt des linken Seiten-Elements (53) an einem linken Endabschnitt desselben in einer Weise zu lagern, so dass es sich um eine untere linke Neigungs-Achse (LDL) dreht, die parallel zu der oberen linken Neigungs-Achse (LUL) ist, und konfiguriert ist, um auf dem Lenker-Seite-Monolith-Körper (200) an einem Zwischen-Abschnitt desselben gelagert zu werden, so dass es sich um eine untere Zwischen-Neigungs-Achse (LDI) dreht,
die parallel zu der oberen Zwischen-Neigungs-Achse (LUI) ist;
wobei der Lenk-Mechanismus (6) umfasst:
einen Lenk-Kraft-Eingabe-Abschnitt (61), in den die Lenk-Kraft eingegeben wird;
eine Lenk-Welle (62), die mit dem Lenk-Kraft-Eingabe-Abschnitt (61) gekoppelt ist,
und konfiguriert ist, um sich um eine Zwischen-Lenk-Achse (SI) zu drehen, die sich in der Auf-und-Ab-Richtung des Fahrzeug-Körper-Rahmens (10) erstreckt; und
einen Lenk-Kraft-Übertragungs-Mechanismus (63), der mit der Lenk-Welle (62) gekoppelt ist, und konfiguriert ist, um eine Drehung der Lenk-Welle (62) auf die rechte stoßdämpfende Vorrichtung (82) und die linke stoßdämpfende Vorrichtung (72) zu übertragen,
wobei ein Haupt-Rohr-Abschnitt (21), der konfiguriert ist, um die Lenk-Welle (62) zu lagern, so dass sie sich um die Zwischen-Lenk-Achse (SI) dreht, ein oberer Naben-Abschnitt (22), der konfiguriert ist, um den Zwischen-Abschnitt des oberen Quer-Elements (51) zu lagern, so dass er sich um die obere Zwischen-Neigungs-Achse (LUI) dreht, und ein unterer Naben-Abschnitt (23), der konfiguriert ist, um den Zwischen-Abschnitt des unteren Quer-Elements (52) zu lagern, so dass er sich um die untere Zwischen-Neigungs-Achse (LDI) dreht, monolithisch zu einem integralen Objekt an dem Lenker-Seite-Monolith-Körper (200) zusammengefügt sind,
**dadurch gekennzeichnet, dass**
der Fahrzeug-Körper-Rahmen (10) einen Fahrzeug-Körper-Rahmen-Seite-Monolith-Körper (100) eines integralen Objekts umfasst, in den der rechte Rahmen (11) und
der linke Rahmen (12) monolithisch verbunden sind, und an dem der Leistungs-Einheit-Lager-Abschnitt (13) vorgesehen ist, und der Lenker-Seite-Monolith-Körper (200) an dem Fahrzeug-Körper-Rahmen-Seite-Monolith-Körper (100) mit einem Bolzen (97, 98, 99) befestigt ist.

2. Das Neige-Fahrzeug gemäß Anspruch 1, **dadurch gekennzeichnet, dass** der untere Quer-Element (52) ein unteres hinteres Quer-Element (522) aufweist, das hinter dem Lenker-Seite-Monolith-Körper (200) angeordnet ist,
wobei der untere Naben-Abschnitt (23) einen unteren hinteren Loch-Abschnitt (34) aufweist, in dem ein unteres hinteres Wellen-Element, das konfiguriert ist, um das untere hintere Quer-Element (522) zu lagern, so dass es sich um die untere Zwischen-Neigungs-Achse (LDI) dreht, gelagert ist, und
wobei der Bolzen (99) in dem unteren hinteren Loch-Abschnitt (34) gelagert ist.

3. Das Neige-Fahrzeug gemäß Anspruch 2, **dadurch gekennzeichnet, dass** der Bolzen (99) sich von dem unteren hinteren Loch-Abschnitt (34) erstreckt, das untere hintere Quer-Element (522) durchdringt und an dem Fahrzeug-Körper-Rahmen-Seite-Monolith-Körper (100) befestigt ist.

4. Das Neige-Fahrzeug gemäß Anspruch 2, **dadurch gekennzeichnet, dass** sich der Bolzen (99) entlang der unteren Zwischen-Neigungs-Achse (LDI) erstreckt.

5. Neige-Fahrzeug gemäß Anspruch 2, **dadurch gekennzeichnet, dass** ein erster Befestigungs-Abschnitt (49), in den der Bolzen (99) eingesetzt ist, mit dem Fahrzeug-Körper-Rahmen-Seite-Monolith-Körper (100) zu einem integralen Objekt verbunden ist, und
wobei der erste Befestigungs-Abschnitt (49) an dem Fahrzeug-Körper-Rahmen (10) an einer Mehrzahl von Stellen in einer Axial-Richtung des Bolzens (99) befestigt ist.

6. Das Neige-Fahrzeug gemäß Anspruch 1, **dadurch gekennzeichnet, dass** ein plattenförmiger Abschnitt (45), dessen Normal-Richtung parallel zu der unteren Zwischen-Neigungs-Achse (LDI) ist, monolithisch mit dem Fahrzeug-Körper-Rahmen-Seite-Monolith-Körper (100) zu einem integralen Objekt verbunden ist.

7. Das Neige-Fahrzeug gemäß Anspruch 1, **gekennzeichnet durch**: mindestens eines der folgenden Merkmale;
obere Bolzen (97), die oberhalb des unteren Quer-Elements (52) und rechts und links der unteren Zwischen-Neigungs-Achse (LDI) vorgesehen sind, und
untere Bolzen (98), die unterhalb des unteren Quer-Elements (52) und rechts und links von der unteren Zwischen-Neigungs-Achse (LDI) vorgesehen sind.

8. Das Neige-Fahrzeug gemäß Anspruch 7, **dadurch gekennzeichnet, dass** der obere Quer-Element (51) vor dem Lenker-Seite-Monolith-Körper (200) vorgesehen ist, und wobei der obere Bolzen (97) hinter dem Lenker-Seite-Monolith-Körper (200) in einer Position vorgesehen ist, in welcher der Bolzen (97) den oberen Quer-Element (51) in einer Front-Ansicht des Neige-Fahrzeugs überlappt.

9. Das Neige-Fahrzeug gemäß Anspruch 1, **dadurch gekennzeichnet, dass** der rechte Rahmen (11) aufweist:
einen rechten oberen Rahmen (111), der sich in der Vorder-und-Rück-Richtung erstreckt; und
einen rechten unteren Rahmen (112), der sich in der Vorder-und-Rück-Richtung erstreckt und unterhalb des rechten oberen Rahmens (111) angeordnet ist,
wobei der linke Rahmen (12) aufweist:
einen linken oberen Rahmen (121), der sich in der Vorder-und-Rück-Richtung erstreckt; und
einen linken unteren Rahmen (122), der sich in der Vorder-und-Rück-Richtung erstreckt und unterhalb des linken oberen Rahmens (121) angeordnet ist, und
wobei der rechte obere Rahmen (111), der rechte untere Rahmen (112), der linke obere Rahmen (121) und der linke untere Rahmen (122) monolithisch mit dem Fahrzeug-Körper-Rahmen-Seite-Monolith-Körper (100) zu einem integralen Objekt verbunden sind.

10. Das Neige-Fahrzeug gemäß Anspruch 1, **dadurch gekennzeichnet, dass** das obere Quer-Element (51) vor dem Haupt-Rohr-Abschnitt (21) angeordnet ist,
wobei das untere Quer-Element (52) ein unteres vorderes Quer-Element (521), das vor dem Haupt-Rohr-Abschnitt (21) angeordnet ist, und ein unteres hinteres Quer-Element (522), das hinter dem Haupt-Rohr-Abschnitt (21) angeordnet ist, aufweist, und
wobei der obere Naben-Abschnitt (22), der konfiguriert ist, um ein oberes Wellen-Element (31) zu lagern, das konfiguriert ist, um das obere Quer-Element (51) zu lagern, so dass es sich um die obere Zwischen-Neigungs-Achse (LUI) dreht, ein unterer vorderer Naben-Abschnitt (231), der konfiguriert ist, um ein unteres vorderes Wellen-Element (33) zu lagern, das konfiguriert ist, um das untere vordere Quer-Element (521) zu lagern, so dass es sich um die untere Zwischen-Neigungs-Achse (LDI) dreht, und ein unterer hinterer Naben-Abschnitt (232), der konfiguriert ist, um ein unteres hinteres Wellen-Element zu lagern, das konfiguriert ist, um das untere hintere Quer-Element (522) zu lagern, so dass es sich um die untere Zwischen-Neigungs-Achse (LDI) dreht, monolithisch mit dem Lenker-Seite-Monolith-Körper (200) zu einem integralen Objekt verbunden sind.

## Revendications

1. Véhicule inclinable comprenant :
un cadre de véhicule (10) configuré pour pencher sur le côté droit du véhicule inclinable lorsque le véhicule inclinable prend un virage à droite et pour pencher sur le côté gauche du véhicule inclinable lorsque le véhicule inclinable prend un virage à gauche,
une roue avant droite (2) configurée pour tourner autour d'un élément d'essieu droit (823) qui s'étend dans une direction d'axe d'essieu droit,
une roue avant gauche (3) disposée directement à la gauche de la roue avant droite (2) par rapport au cadre du véhicule (10) et configurée pour tourner autour d'un élément d'essieu gauche (723) qui s'étend dans une direction d'axe d'essieu gauche,
un mécanisme de liaison (5) configuré pour modifier la position relative entre la roue avant droite (2) et la roue avant gauche (3) dans la direction haut bas du cadre du véhicule (10) lorsque le cadre du véhicule (10) penche,
un dispositif d'amortisseur droit (82) configuré pour supporter la roue avant droite (2) au niveau de sa partie inférieure et pour atténuer le déplacement relatif de la roue avant droite (2) vers le mécanisme de liaison (5),
un dispositif d'amortisseur gauche (72) configuré pour supporter la roue avant gauche (3) au niveau de sa partie inférieure et pour atténuer le déplacement relatif de la roue avant gauche (3) vers le mécanisme de liaison (5),
un organe de support d'unité de puissance (13) configuré pour supporter une unité de puissance (96) sur le cadre du véhicule (10), et
un mécanisme de braquage (6),
dans lequel le cadre de véhicule (10) comprend :
un cadre droit (11) s'étendant dans la direction avant arrière et un cadre gauche (12) disposé à la gauche du cadre droit (11) et s'étendant dans la direction avant arrière,
un corps monolithique du côté liaison (200),
dans lequel le mécanisme de liaison (5) comprend :
un élément de côté droit (54) configuré pour supporter la partie supérieure du dispositif d'amortisseur droit (82) de manière à tourner autour d'un axe directeur droit (SR) qui s'étend dans la direction haut bas du cadre du véhicule (10),
un élément de côté gauche (53) configuré pour supporter la partie supérieure du dispositif d'amortisseur gauche (72) de manière à tourner autour d'un axe directeur gauche (SL) qui est parallèle à l'axe directeur droit (SR),
une traverse supérieure (51) configurée pour supporter la partie supérieure de l'élément de côté droit (54) au niveau de son extrémité droite de manière à tourner autour d'un axe d'inclinaison droit supérieur (LUR) qui s'étend dans la direction avant arrière, et pour supporter une partie supérieure de l'élément de côté gauche (53) au niveau de son extrémité gauche de manière à tourner autour d'un axe d'inclinaison gauche supérieur (LUL) qui est parallèle à l'axe d'inclinaison droit supérieur (LUR), et configurée pour être supportée sur le corps monolithique du côté liaison (200) au niveau de sa partie intermédiaire de manière à tourner autour d'un axe d'inclinaison intermédiaire supérieur (LUI) qui est parallèle à l'axe d'inclinaison droit supérieur (LUR), et
une traverse inférieure (52) configurée pour supporter la partie inférieure de l'élément de côté droit (54) au niveau de son extrémité droite de manière à tourner autour d'un axe d'inclinaison droit inférieur (LDR) qui est parallèle à l'axe d'inclinaison droit supérieur (LUR), et pour supporter une partie inférieure de l'élément de côté gauche (53) au niveau de son extrémité gauche de manière à tourner autour d'un axe d'inclinaison gauche inférieur (LDL) qui est parallèle à l'axe d'inclinaison gauche supérieur (LUL), et configurée pour être supportée sur le corps monolithique du côté liaison (200) au niveau de sa partie intermédiaire de manière à tourner autour d'un axe d'inclinaison intermédiaire inférieur (LDI) qui est parallèle à l'axe d'inclinaison intermédiaire supérieur (LUI),
dans lequel le mécanisme de braquage (6) comprend :
un organe d'entrée de force de braquage (61) sur lequel est appliquée une force de braquage,
un arbre de direction (62) couplé à l'organe d'entrée de force de braquage (61) et configuré pour tourner autour d'un axe de direction intermédiaire (SI) qui s'étend dans la direction haut bas du cadre du véhicule (10), et
un mécanisme de transmission de force de braquage (63) couplé à l'arbre de direction (62) et configuré pour transmettre la rotation de l'arbre de direction (62) au dispositif d'amortisseur droit (82) et au dispositif d'amortisseur gauche (72),
où un organe tubulaire principal (21), configuré pour supporter l'arbre de direction (62) de manière à tourner autour de l'axe de direction intermédiaire (SI), un organe de bossage supérieur (22), configuré pour supporter la partie intermédiaire de la traverse supérieure (51) de manière à tourner autour de l'axe d'inclinaison intermédiaire supérieur (LUI) et un organe de bossage inférieur (23), configuré pour supporter la partie intermédiaire de la traverse inférieure (52) de manière à tourner autour de l'axe d'inclinaison intermédiaire inférieur (LDI) sont réunis en une seule pièce dans un objet intégré au niveau du corps monolithique du côté liaison (200),
**caractérisé en ce que** :
le cadre du véhicule (10) comprend un corps monolithique du côté cadre de véhicule (100) d'un objet intégré dans lequel le cadre droit (11) et le cadre gauche (12) sont réunis en une seule pièce, et sur lequel est disposé l'organe de support d'unité de puissance (13),
et le corps monolithique du côté liaison (200) est immobilisé sur le corps monolithique du côté cadre de véhicule (100) avec un boulon (97, 98, 99).

2. Véhicule inclinable selon la revendication 1, **caractérisé en ce que** la traverse inférieure (52) comprend un élément de traverse arrière inférieur (522) qui est positionné derrière le corps monolithique du côté liaison (200),
dans lequel l'organe de bossage inférieur (23) comprend un trou arrière inférieur (34) où est supporté un élément d'arbre arrière inférieur configuré pour supporter l'élément de traverse arrière inférieur (522) de manière à tourner autour de l'axe d'inclinaison intermédiaire inférieur (LDI), et
dans lequel le boulon (99) est supporté dans le trou arrière inférieur (34).

3. Véhicule inclinable selon la revendication 2, **caractérisé en ce que** le boulon (99) s'étend depuis le trou arrière inférieur (34), pénètre dans l'élément de traverse arrière inférieur (522) et est immobilisé sur le corps monolithique du côté cadre de véhicule (100).

4. Véhicule inclinable selon la revendication 2, **caractérisé en ce que** le boulon (99) s'étend le long de l'axe d'inclinaison intermédiaire inférieur (LDI).

5. Véhicule inclinable selon la revendication 2, **caractérisé en ce qu'**un premier organe de fixation (49), dans lequel est inséré le boulon (99), est réuni au corps monolithique du côté cadre de véhicule (100) en un objet intégré, et
dans lequel le premier organe de fixation (49) est fixé au cadre du véhicule (10) à une pluralité d'emplacements dans la direction axiale du boulon (99).

6. Véhicule inclinable selon la revendication 1, **caractérisé en ce qu'**un organe de type plaque (45), dont la direction normale est parallèle à l'axe d'inclinaison intermédiaire inférieur (LDI), est réuni en une seule pièce au corps monolithique du côté cadre de véhicule (100) en un objet intégré.

7. Véhicule inclinable selon la revendication 1, **caractérisé par** au moins l'un parmi :
des boulons supérieurs (97) qui sont disposés au-dessus de la traverse inférieure (52) et sont disposés à la droite et à la gauche de l'axe d'inclinaison intermédiaire inférieur (LDI), et
des boulons inférieurs (98) qui sont disposés en dessous de la traverse inférieure (52) et sont disposés à la droite et à la gauche de l'axe d'inclinaison intermédiaire inférieur (LDI) .

8. Véhicule inclinable selon la revendication 7, **caractérisé en ce que** la traverse supérieure (51) est disposée en avant du corps monolithique du côté liaison (200), et
dans lequel le boulon supérieur (97) est disposé derrière le corps monolithique du côté liaison (200) dans une position où le boulon (97) chevauche la traverse supérieure (51) selon une vue avant du véhicule inclinable.

9. Véhicule inclinable selon la revendication 1, **caractérisé en ce que** le cadre droit (11) comprend :
un cadre supérieur droit (111) qui s'étend dans la direction avant arrière, et
un cadre inférieur droit (112) qui s'étend dans la direction avant arrière et qui est positionné en dessous du cadre supérieur droit (111),
dans lequel le cadre gauche (12) comprend :
un cadre supérieur gauche (121) qui s'étend dans la direction avant arrière, et
un cadre inférieur gauche (122) qui s'étend dans la direction avant arrière et qui est positionnée en dessous du cadre supérieur gauche (121), et
dans lequel le cadre supérieur droit (111), le cadre inférieur droit (112), le cadre supérieur gauche (121) et le cadre inférieur gauche (122) sont réunis en une seule pièce au corps monolithique du côté cadre de véhicule (100) en un objet intégré.

10. Véhicule inclinable selon la revendication 1, **caractérisé en ce que** la traverse supérieure (51) est positionnée en avant de l'organe tubulaire principal (21),
dans lequel la traverse inférieure (52) comprend un élément de traverse avant inférieur (521) qui est positionné en avant de l'organe tubulaire principal (21) et un élément de traverse arrière inférieur (522) qui est positionné derrière l'organe tubulaire principal (21), et
dans lequel l'organe de bossage supérieur (22), configuré pour supporter un élément d'arbre supérieur (31), configuré pour supporter l'élément de traverse supérieur (51) de manière à tourner autour de l'axe d'inclinaison intermédiaire supérieur (LUI), un organe de traverse avant inférieur (231), configuré pour supporter un élément d'arbre avant inférieur (33), configuré pour supporter l'élément de traverse avant inférieur (521) de manière à tourner autour de l'axe d'inclinaison intermédiaire inférieur (LDI), ainsi qu'un organe de bossage arrière inférieur (232), configuré pour supporter un élément d'arbre arrière inférieur, configuré pour supporter l'élément de traverse arrière inférieur (522) de manière à tourner autour de l'axe d'inclinaison intermédiaire inférieur (LDI), sont réunis en une seule pièce au corps monolithique du côté liaison (200) en un objet intégré.
